# EUROPÄISCHE PATENTSCHRIFT

(11) **EP 1 454 971 B1**
(45) Veröffentlichungstag und Bekanntmachung des Hinweises auf die Patenterteilung: **08.02.2006**
(21) Anmeldenummer: 04005349.8
(22) Anmeldetag: 05.03.2004
(51) Int. Cl.: C09D 175/06

(54) **Polyester**
Polyester
Polyester

(30) Priorität: 07.03.2003 DE 10310446
(43) Veröffentlichungstag der Anmeldung: 08.09.2004
(73) Patentinhaber: PPG Industries Lacke GmbH, 42329 Wuppertal (DE)
(72) Erfinder: Jahny, Karsten, 71636 Ludwigsburg (DE); Hille, Hans-Dieter, 51467 Bergisch Gladbach (DE); Lamers, Paul, Allison Park, PA 15101 (US)
(74) Vertreter: Dunkelberg, Oliver Thomas Michael

(56) Entgegenhaltungen:
- EP-A- 0 116 852
- EP-A- 0 339 433
- DE-A- 3 337 394
- DE-A- 10 009 412

## Beschreibung

Die vorliegende Erfindung betrifft einen Polyester, ein Verfahren zur Verbesserung dekorativer Eigenschaften wasserverdünnbarer Beschichtungszusammensetzungen sowie dessen Verwendung in einer Mehrschichtlackierung, insbesondere bei der Serienlackierung von Automobilrohkarosserien.

Es ist bekannt, Polyester als Bindemittel in unterschiedlichsten Lackformulierungen für Beschichtungszusammensetzungen zu verwenden.
Werden aber an den Lack hohe Anforderungen an die mechanische Beanspruchbarkeit des ausgehärteten Lackfilms gestellt, wie es besipielsweise bei der Automobilserienlackierung der Fall ist, werden in jüngster Zeit immer häufiger Polyurethane oder Polyurethan modifizierte System eingesetzt. Denn Lacke nur auf Basis von Polyestern genügen diesen Anforderungen nicht.
Darüber hinaus zeigen Lacke mit Bindemitteln auf Basis von polyurethanmodifizierten Systemen bei der Automobilserienlackierung eine deutlich verbesserte Überbrennstabilität im Vergleich mit Bindemitteln auf Basis von Polyestern.

Für die Serienlackierung von Automobilrohkarosserien wird im allgemeinen eine Mehrschichtlackierung aus insgesamt vier voneinander unterschiedlichen Schichten (Vierschichtaufbau) verwendet, wobei diese vier Schichten nacheinander in getrennten Lackieranlagen aufgetragen werden:
Die erste, direkt auf dem Autoblech befindliche Schicht ist eine elektrophoretisch aufgetragene Schicht (Electrocoatschicht, KTL-Schicht), die durch Elektro-tauchlackierung - hauptsächlich kathodische Tauchlackierung (KTL) - zwecks Korrosionsschutz aufgebracht und anschließend eingebrannt wird.
Die zweite, auf der Elektrocoatschicht befindliche und etwa 30 bis 40 µm dicke Schicht ist eine sogenannte Füllerschicht, die einerseits Schutz gegen mechanische Angriffe (Steinschlagschutzfunktion) bietet, andererseits einen ausreichenden Decklackstand gewährleistet, d.h. die rauhe Oberfläche der Rohkarosserie für die nachfolgende Decklackierung glättet und kleinere Unebenheiten ausfüllt. Die zur Herstellung dieser Füllerschicht verwendeten Lacke enthalten neben Bindemitteln auch Pigmente. Dabei hat die Benetzbarkeit der verwendeten Pigmente einen Einfluss auf den Decklackstand der gesamten Mehrschichtlackierung und auch auf den Glanz der Füllerschicht, wie er von einigen Automobilherstellern gefordert wird. Die Füllerschicht wird größtenteils durch Applikation mit elektrostatischen Hochrotationsglocken und anschließendem Einbrennvorgang bei Temperaturen über 130 °C erzeugt.
Die dritte, auf der Füllerschicht befindliche Schicht ist die Basislackschicht, die durch entsprechende Pigmente der Karosserie die gewünschte Farbe gibt. Der Basislack wird im herkömmlichen Spritzverfahren aufgetragen. Die Schichtdicke dieser herkömmlichen Basislackschicht liegt je nach Farbton zwischen etwa 12 bis 25 µm. Meistens wird diese Schicht, besonders bei Metallic-Effektlacken, in zwei Verfahrensschritten aufgebracht. In einem ersten Schritt erfolgt die Auftragung mittels elektrostatischer Hochrotationsglocken, gefolgt von einem zweiten Auftrag mittels pneumatischer Zerstäubung. Diese Schicht wird (bei Verwendung von wässrigem Basislack) mit Infrarotstrahlern und/oder durch Warmluftkonvektion zwischengetrocknet.
Die vierte und oberste, auf der Basislackschicht befindliche Schicht ist die Klarlackschicht, die meistens in einem Auftrag durch elektrostatische Hochrotationsglocken aufgetragen wird. Sie verleiht der Karosserie den gewünschten Glanz und schützt den Basislack vor Umwelteinflüssen (UV-Strahlung, Salzwasser, etc.). Anschließend werden die Basislackschicht und die Klarlackschicht gemeinsam eingebrannt.

Die zur Herstellung einer Mehrschichtlackierung für die Automobilindustrie verwendeten Füller basieren immer noch zu einem erheblichen Anteil auf Lösemittelsystemen und erreichen eine Festkörperkonzentration bis zu 60 %. Diese hohe Festkörperkonzentration gewährleistet eine effiziente Applikation und damit einen guten Decklackstand der fertigen Mehrschichtlackierung. Beispiele für solche konventionellen Füller sind aus der DE 33 37 394 A1 bekannt.

Die Einbrenntemperaturen der Füllerzusammensetzungen liegen in der Regel zwischen 155 und 165 °C. Von einigen Automobilherstellern wird darüber hinaus eine sogenannte "Überbrennstabilität" bis zu 190 °C gefordert. Das bedeutet, dass die mechanischen Eigenschaften wie Haftung und Steinschlagbeständigkeit bei diesen hohen Einbrennbedingungen nicht wesentlich verschlechtert werden dürfen.
Um diese Forderung zu erfüllen, bestehen die Bindemittetzusammensetzungen entsprechender Füllersysteme häufig aus gesättigten Polyestern, kombiniert mit hoch alkylierten Melaminharzen als Vemetzer. Es sind auch Kombinationen mit Polyurethanen bekannt, insbesondere mit blockierten Polyisocyanaten. Das hierfür am häufigsten verwendete Blockierungsmittel ist Methylethylketoxim. Der Vorteil bei der Verwendung von Methylethylketoxim gegenüber anderen Biockierungsmitteln besteht in seiner günstigen Deblockierungstemperatur, seiner Flüchtigkeit und seiner guten Verfügbarkeit. Nachteilig ist seine Vergilbungsneigung, was die Verwendbarkeit für helle Einbrennlacke stark einschränkt.

Die Vemetzung mit blockierten Polyisocyanaten verbessert zwar die Steinschlagbeständigkeit und die Überbrennstabilität, jedoch ist die Mitverwendung von Melaminharzen als Vernetzer unerlässlich im Hinblick auf andere wichtige Eigenschaften der Füllerschicht wie gute Schleifbarkeit und Beständigkeit gegenüber chemischen Angriffen, z.B. gegenüber Bremsflüssigkeit. Darüber hinaus werden auch der Verlauf und Decklackstand durch Kombination dieser beiden Vernetzer positiv beeinflusst.

Solche Hybridsysterne aus blockierten Polyisocyanaten und Melaminharzen sind jedoch problematisch im Hinblick auf die richtige Einstellung ihrer Reaktivität: Während bei den Polyurethanen die Deblockierungsreaktion und die nachfolgende Urethanbildungsreaktion mit basischen Katalysatoren unterstützt wird, lässt sich die Vernetzungsreaktion von Melaminharzen nur mit sauren Katalysatoren beschleunigen. Gegenseitige negative Einflüsse sind unvermeidlich.

Vor dem Hintergrund der bei konventionellen Füllern eingesetzten Lösemittel und der damit verbundenen Umweltproblematiken sind verstärkt Entwicklungen auf dem Gebiet wasserverdünnbarer Füller auf Basis von Polyurethanen zu beobachten.
Um die Wasserdispergierbarkeit von Polyurethanen zur erreichen, werden Carboxylgruppen in das Molekül eingebaut, die - häufig am Ende des Syntheseverfahrens - durch Neutralisation mit (vorzugsweise flüchtigen) Aminen in Carboxylatanionen umgewandelt werden. Sehr häufig erfolgt dieser Einbau von Carboxylgruppen durch Umsetzung mit Dimethylolpropionsäure.
Beispiele für solche wasserverdünnbaren Füller, die entsprechende Polyurethane enthalten, sind aus der EP 0 726 919 A1, EP 0 594 685 B1, EP 1 110 983 A2 und EP 1 110 987 A1 bekannt.

Es hat sich aber gezeigt, dass im industriellen Maßstab mit diesen wasserverdünnbaren Füllerzusammensetzungen es nur sehr schwierig ist, eine Festkörperkonzentration von mehr als 50 % zu erzielen, wie es für die Verarbeitungssicherheit wünschenswert ist.

Vor dem Hintergrund weiterer Energieeinsparungen und einer Verkürzung der Prozessschritte besteht seitens der Automobilindustrie darüber hinaus noch die Forderung nach einer Senkung der Füllereinbrenntemperatur von derzeit etwa 160 °C. Allerdings müssen solche Füller immer noch eine Überbrennstabilität bis zu 190 °C aufweisen.

Aber auch an den Basislack werden Anforderungen gestellt, die bisher nur durch besonders abgestimmte Zusammensetzungen erfüllt wurden:
Zum einen muss die Basislackschicht in ausgehärtetem Zustand zu einer optimalen Ausrichtung der als Effektpigmente verwendeten Aluminiumflakes führen. Diese unter dem Begriff "Flip/Flop-Effekt" bekannte Eigenschaft ist für jede Metalliclackierung von entscheidender Bedeutung. Ein besonders guter "Flip/Flop-Effekt" wird dann erreicht, wenn die plättchenförmigen Effektpigmente möglichst parallel zur Lackschicht ausgerichtet sind.

Zum anderen muss der Basislack eine gute Verarbeitbarkeit aufweisen. Das bedeutet, dass möglichst in einem Spritzauftrag eine so hohe Schichtdicke erzielt werden kann, dass eine ausreichende Farbdeckung sichergestellt ist. Werden bei einer Mehrschichtlackierung beispielsweise für den stark deckenden Farbton Schwarz 17 µm Dicke einer Basislackschicht für eine ausreichende Farbdeckung benötigt, so sind es für eine vergleichbare Mehrschichtlackierung mit dem weniger deckenden Farbton Weiß mindestens 40 µm. Eine solche Schichtdicke mit einem Spritzvorgang aufzutragen, ist immer noch ein erhebliches Problem, da die rheologischen Eigenschaften des wasserverdünnbaren Basislacks entsprechend vorhanden sein müssen.

Unter dem Begriff "rheologische Eigenschaften" wird verstanden, dass der Lack einerseits beim Spritzvorgang, also bei hohen Schergeschwindigkeiten, eine so niedrige Viskosität hat, dass er leicht zerstäubt werden kann, und andererseits beim Auftreffen auf dem Substrat, also bei niedrigen Schergeschwindigkeiten, eine so hohe Viskosität hat, dass er genügend standfest ist und keine Läuferbildung zeigt. Auch die Ausbildung eines ausgeprägten Metallic-Effektes hängt mit diesen Eigenschaften zusammen. Je höher die Schichtdicke sein soll, um so größer ist das Problem, diese widersprüchlichen Eigenschaften zu vereinigen.
Diese grundsätzliche Problematik ist wohl auch der Grund, warum eine Vielzahl von Druckschriften sich mit speziell abgestimmten Bindemittelsystemen oder auch mit speziellen Additiven für wasserverdünnbare Basislacke beschäftigt.

Ein Problem bei der Verwendung von Additiven ist, dass diese zwar der Beschichtungszusammensetzung die gewünschte Eigenschaft verleihen, jedoch werden durch ihren Zusatz andere Eigenschaften oftmals unerwünscht beeinflußt, so dass die Verwendung weiterer Additive notwendig wird. Die Verwendung mehrerer Additive bewirkt eine - bezogen auf die gewünschten Eigenschaften des fertigen Lacks - für die Praxis unerwünschte, schwer kontrollierbare Komplexität des Lacksystems.

Um diese Komplexität und die daraus resultierenden "Nebenwirkungen" zu minimieren, werden anstelle von Additiven "maßgeschneiderte Polymere" verwendet, d.h. Verbindungen, die dem Lacksystem die gewünschten Eigenschaften ohne Zusatz herkömmlicher Additive verleihen.

Solche "maßgeschneiderten Polymere" sind aus der WO 00/63265 und der WO 00/63266 bekannt, die erhältlich sind aus einem mehrstufigen Polymerisationsverfahren, wobei in einem ersten Schritt eine Polymerisation von ethylenisch monofunktionellen Verbindungen mit ethylenisch di- oder multifunktionellen Verbindungen in Gegenwart eines Polyesterpolyols, Polyurethans und/oder Polyacrylats durchgeführt wird. Als letzter Schritt wird das so erhaltene Produkt mit einem Vernetzer umgesetzt, so dass ein vollständig vernetztes Mikrogel erhalten wird. Dieses vollständig vernetzte Produkt wird dann einer Bindemittelformulierung zugesetzt, die zwingend ein vernetzbares Bindemittel enthält. Bei der Ausbildung des fertigen Lackfilms, beispielsweise unter Einbrennbedingung, wird dann das Bindemittel vernetzt.

Zwar verleiht dieses "maßgeschneiderte Polymer" wasserverdünnbaren Effektbasislackzusammensetzungen der resultierenden Mehrschichtlackierung eine ausgezeichnete Steinschlagbeständigkeit bei Verwendung eines handelsüblichen Füllers.
Allerdings sind diese "maßgeschneiderte Polymere" nicht universell in Basislackzusammensetzungen verwendbar. Beispielsweise ist es nicht möglich, unter Verwendung solcher "maßgeschneiderten Polymere" Uni-Basecoats mit einem Festkörpergehalt mit mehr als 30 % herzustellen, die den Anforderungen der Automobilindustrie in Bezug auf die Appearance genügen.
Diese "maßgeschneiderten Polymere" eignen sich darüber hinaus auch nur unzureichend für die Herstellung wasserverdünnbarer Füllerzusammensetzungen. Denn die resultierende Füllerschicht zeigt eine ungenügende Schleifbarkeit - darüber hinaus weist eine so hergestellte Mehrschichtlackierung eine zu geringe Steinschlagbeständigkeit und unzureichende Appearance auf.

Neben den zuvor beschriebenen Eigenschaften der Füller- und der Basislackschicht muss die fertige Mehrschichtlackierung ebenfalls ganz spezielle Anforderungen erfüllen. Diese werden im allgemeinen anhand des "Gesamteigenschaftsniveaus" der fertigen Mehrschichtlackierung charakterisiert.
Dieses Gesamteigenschaftniveau spiegelt das Zusammenspiel der unterschiedlichen Eigenschaften der einzelnen Lackschichten wider.

Eine Eigenschaft, die das Gesamteigenschaftsniveau der fertigen Mehrschichtlackierung maßgeblich bestimmt, ist die dekorative Eigenschaft (Appearance).
Es gibt verschiedene Methoden, diese zu messen. Eine davon ist die "Wave-Scan Methode", bei der die sogenannten "short-wave" und "long-wave"-Werte ermittelt werden. Der "short-wave" Wert sagt in erster Linie etwas darüber aus, wie effektiv der Lackaufbau die Rauhigkeit des Substrates ausgleicht. Der Füller spielt hierbei eine herausragende Rolle. Je rauher die Oberfläche ist, um so größer ist der "short-wave"-Wert. Der "long-wave"-Wert ist ein Parameter für den Verlauf der Oberfläche. Auch hier ist ein geringerer Wert besser als ein höherer.
Es ist bekannt, dass diese Rauhigkeit einen erheblichen Einfluß auf die Oberflächenglätte der fertigen Mehrschichtlackierung hat. Diese Rauhheit auszugleichen ist die hauptsächliche Aufgabe der Füllerzusammensetzung. Weitere Details zu diesem Meßverfahren sind der Broschüre "The objective eye for orange peel" (1999) der Fa. Byk-Gardener zu entnehmen.

Ein besonders kritischer Parameter des Gesamteigenschaftniveaus einer Automobilserienlackierung ist die Steinschlagbeständigkeit der fertigen Mehrschichtlackierung. Sie spiegelt einerseits das Zusammenspiel der unterschiedlichen Eigenschaften der einzelnen Schichten wider und zum anderen wird sie durch die Eigenschaften der Füllerschicht maßgeblich beeinflußt. Ein wesentlicher Parameter hierbei ist die Haftung und die Elastizität der verschiedenen Schichten. Ist beispielsweise die Haftung der Füllerschicht auf der Elektrotauchlackierung zu hoch, dann wird beim Steinschlag die Elektrotauchlackierung beim Abplatzen der Füllerschicht mitgerissen. Eine solche Eigenschaft bewirkt eine Korrosion des Automobilblechs und ist deshalb völlig unerwünscht.
Ist dagegen die Haftung der Füllerschicht zu gering, führt Steinschlag auf eine Mehrschichtlackierung zu flächenmäßig großen Abplatzungen der entsprechenden Füllerschicht. Besonders bei hellen Farbtönen wird dann die unter der Füllerschicht befindliche, dunkle Elektrotauchlackierung störend mit dem bloßen Auge wahrnehmbar.
Vor diesem Hintergrund ist verständlich, warum die Automobilhersteller einen Test auf die Steinschlagbeständigkeit der fertigen Mehrschichtlackierung als zwingende Voraussetzung für die Serienfreigabe der einzelnen Lackkomponenten eingeführt haben.
Eine ausreichende Steinschlagschutzfunktion einer Mehrschichtlackierung auf dem Gebiet der Automobilserienlackierung ist dann gegeben, wenn sowohl die Bedingungen des "Monoschlagtests" als auch die des "Multischlagtests" erfüllt werden.
Beim sogenannten "Monoschlagtest" wird der Bruch im Aufbau der Mehrschichtlackierung unter Einwirkung einer genau definierten mechanischen Belastung lokalisiert. Beim sogenannten "Multischlagtest" wird die mechanische Belastbarkeit einer größeren Fläche der fertigen Beschichtung bei unterschiedlichen mechanischen Belastungen simuliert. Weitere Einzelheiten beider Tests finden sich bei den Beispielen.
Diese Tests sind dann bestanden, wenn die fertige Mehrschichtlackierung bei einer genau definierten mechanischen Belastung Abplatzungen aufweist, die eine bestimmte Fläche nicht überschreiten und deren Trennebene entweder zwischen der Electrocoatschicht und der Füllerschicht liegt (adhäsiv), oder innerhalb der Füllerschicht liegt (cohäsiv).

Aufgabe der vorliegenden Erfindung ist die Bereitstellung eines Lackbestandteils, der die dekorativen Eigenschaften einer Mehrschichtlackierung, insbesondere einer Automobilserienlackierung, verbessert, ohne das übrige Gesamteigenschaftsniveau negativ zu beeinflussen.

Des weiteren soll der Lackbestandteil auch bei der Formulierung einer wasserverdünnbaren Füllerbeschichtungszusammensetzung einsetzbar sein und sich positiv auf den Festkörpergehalt und die Einbrenntemperatur auswirken.
Der Festkörpergehalt (bei Spritzviskosität) eines Lackes spielt ganz besonders bei der Automobilserienlackierung für die Verarbeitungssicherheit und für die Oberflächenbeschaffenheit des eingebrannten Lackfilms eine wichtige Rolle:
Zum Auftrag einer bestimmten Trockenfilmstärke steht bei gegebener Taktzeit (Bandgeschwindigkeit) eine limitierte Zerstäuberenergie zur Verfügung. Die Qualität der Zerstäubung ist abhängig davon, wieviel Lack in der gegebenen Zeit zerstäubt werden muß (niedrige Ausflußrate - gute Zerstäubung). Die zur Erreichung der Soll-Schichtstärke (nach dem Einbrennen) notwendige Feststoffmenge muß in der gegebenen Zeit "transportiert" werden. Je höher der Festkörpergehalt ist, um so niedriger die Ausflußrate, desto besser die Zerstäubung, umso gleichmäßiger und glatter die Oberfläche der Lackschicht.
Ein weiterer Vorteil eines hohen Festkörpergehalts ist die Tatsache, dass die Schichtstärke des nassen Films niedriger ist, was dazu führt, dass beim Trocknungsvorgang weniger Schrumpf auftritt. Auch die Tendenz, Kochblasen und Nadelstiche zu bilden, wird durch höheren Festkörpergehalt erheblich gemindert.

Unter dem Begriff "kochsicher" wird die Eigenschaft eines Lacks verstanden, dass während des Einbrennvorgangs keine gasförmigen Verbindungen entstehen oder freigesetzt werden, die während des Härtungsvorgangs in der Lackschicht verbleiben. Die hierauf zurückzuführenden Defekte werden auch als "Kocher" oder "Nadelstiche" bezeichnet.

"Kocher" entstehen durch Einschlüsse gasförmiger Substanzen, sehen wie Schaum aus, haben eine geschlossene Oberfläche, während unter dem Begriff "Nadelstiche" porenförmige Vertiefungen verstanden werden.
Im allgemeinen gilt, dass eine höhere Lackschichtdicke die Gefahr von Kochern und Nadelstichen erhöht.

Auch die Vergilbungsbeständigkeit ist besonders wichtig im Hinblick auf die Reparaturlackierung bei der Automobilherstellung: Wenn beispielsweise bei der Serienlackierung die Reparatur eines Teils der Automobilkarosserie notwendig ist, wird nach der Reparaturlackierung die fertige Karosserie mit dem überlackierten Teil im Einbrennofen erneut den hohen Einbrenntemperaturen ausgesetzt. Bei einer unzureichenden Vergilbungsstabilität des Füllers oder des Basislacks sind deutliche Farbtondifferenzen, insbesondere bei hellen Farbtönen, zu beobachten.

Darüber hinaus soll der zur Herstellung der Mehrschichtlackierung eingesetzte Lack bei unterschiedlichsten Verarbeitungsbedingungen appliziert werden können, ohne dass die dekorativen Eigenschaften der resultierenden Mehrschichtlackierung negativ beeinflußt werden.
Diese anwendungstechnische Eigenschaft eines Lacks hat einen erheblichen Einfluß auf die optischen Eigenschaften der resultierenden Mehrschichtlackierung: So beeinflußt beispielsweise die relative Luftfeuchtigkeit der Umgebung bei der Verarbeitung sowohl einer Füllerzusammensetzung als auch einer Basislackzusammensetzung die Oberflächenglätte: Wird ein und derselbe Lack bei niedriger Umgebungsfeuchtigkeit appliziert, so trifft der Spritznebel mit einer zu hohen Viskosität auf das zu lackierende Substrat auf, was sich in einem unzureichendem Verlauf bemerkbar macht. Wird der Lack aber bei hoher relativer Luftfeuchtigkeit appliziert, so ist die Viskosität des auf dem Substrat haftenden Lackfilms zu gering und es sind Läufer zu beobachten.
Um diesen Nachteil zu vermeiden, muß entweder der wasserverdünnbare Lack auf die relative Umgebungsfeuchtigkeit eingestellt oder die Umgebungsfeuchtigkeit durch aufwendige Klimatisierungen auf einem bestimmten Wert konstant gehalten werden.
Diese anwendungstechnische Eigenschaft eines Lacks, auch bei unterschiedlichsten Bedinungen appliziert werden zu können, wird auch mit "Robustheit" oder "Größe des Verarbeitungsfensters" bezeichnet.

Die Aufgabe wird erfindungsgemäß gelöst durch ein Polyesterpolyol, erhältlich aus der Umsetzung mindestens einer Polycarbonsäure oder deren Anhydrid mit mindestens einer OH-Verbindung, wobei mehr als 45 Mol% der Polycarbonsäure Trimellithsäure oder deren Anhydrid ist; die OH-Verbindung höchstens zwei Hydroxylgruppen pro Molekül aufweist; und das durchschnittliche Molekulargewicht aller zur Herstellung des Polyesterpolyols eingesetzten OH-Verbindungen mehr als 210 beträgt.

Das erfindungsgemäße Polyesterpolyol kann sowohl in lösemittelhaltigen als auch in wasserverdünnbaren Beschichtungszusammensetzungen verwendet werden. Bei lösernittelbasierten Beschichtungszusammensetzungen ist die Säurezahl des erfindnungsgemäßen Polyesterpolyols unkritisch, sollte aber im allgemeinen über 5 mg KOH/g liegen. Bei wasserverdünnbaren System hingegen sollte die Säurezahl bevorzugt mehr als 15 mg KOH/g betragen.

Das erfindungsgemäße Polyesterpolyol zeichnet sich dadurch aus, dass es in verschiedenartigen Beschichtungszusammensetzungen, die für die Mehrschichtlackierung von Automobilen verwendet werden, besonders die anwendungskritischen Eigenschaften der resultierenden Mehrschichtlackierung entscheidend positiv beeinflußt.
Allgemein ist zu beobachten, dass das erfindungsgemäße Polyesterpolyol der Beschichtungszusammensetzung, in der es enthalten ist, eine deutlich erhöhte Kochsicherheit, Vergilbungsfreiheit und Universalität gegenüber verschiedenen Anwenderspezifikationen verleiht. Hinsichtlich der unter Verwendung solcher Beschichtungszusammensetzungen hergestellten Mehrschichtlackierung zeigt die fertige Lackierung eine verbesserte Steinschlagbeständigkeit und Appearance. Des weiteren weisen Füllerzusammensetzungen, die das erfindungsgemäße Polyesterpolyol enthalten, eine verbesserte Schleifbarkeit auf.
Somit ermöglicht das erfindungsgemäße Polyesterpolyol zum ersten Mal eine Verbesserung verschiedenster Lackeigenschaften, die bisher nur durch ausgewählte Bindemittelkombinationen, spezielle (maßgeschneiderte) Polymere und/oder durch Verwendung von Additiven möglich war.

Die Erfindung betrifft des weiteren ein Verfahren zur Verbesserung dekorativer Eigenschaften wasserverdünnbarer Beschichtungszusammensetzungen, wobei der applikationsfertige Lack mehr als 20 Gew.-%, bezogen auf den Festharzanteil des applikationsfertigen Lacks, ein Polyesterpolyol mit einer Säurezahl von mehr als 15 mg KOH/g enthält, welches aus der Umsetzung mindestens einer Polycarbonsäure oder deren Anhydrid mit mindestens einer OH-Verbindung erhältlich ist. Hierbei ist entscheidend, dass mehr als 45 Mol% der Polycarbonsäure Trimellithsäure oder deren Anhydrid sind; dass die OH-Verbindung höchstens zwei Hydroxylgruppen pro Molekül aufweist; und dass das durchschnittliche Molekulargewicht aller zur Herstellung des Polyesterpolyols eingesetzten OH-Verbindungen mehr als 210 beträgt.

Eine weitere Ausführungsform der vorliegenden Erfindung betrifft die Verwendung eines Polyesterpolyols, erhältlich aus der Umsetzung mindestens einer Polycarbonsäure oder deren Anhydrid mit mindestens einer OH-Verbindung, wobei mehr als 45 Mol% der Polycarbonsäure Trimellithsäure oder deren Anhydrid ist; die OH-Verbindung höchstens zwei Hydroxylgruppen pro Molekül aufweist; und das durchschnittliche Molekulargewicht aller zur Herstellung des Polyesterpolyols eingesetzten OH-Verbindungen mehr als 210 beträgt, in einer Mehrschichtlackierung, insbesondere in der Automobilserienlackierung.

Ebenso betrifft die vorliegende Erfindung eine Mehrschichtlackierung auf einem metallischen, gegebenenfalls phosphatierten Substrat mit mindestens zwei aufeinanderfolgende Lackschichten, wobei die erste, auf dem elektrisch leitfähigen Substrat befindliche Schicht aus einem elektrophoretisch abgeschiedenen Überzugsmittel erhältlich ist; und die zweite, farbgebende Schicht erhältlich ist aus einer wasserverdünnbaren Beschichtungszusammensetzung, die das zuvor beschriebene, erfindungsgemäße Polyesterpolyol enthält.

Es ist aber genausogut möglich, erfindungsgemäß eine Mehrschichtlackierung auf einem metattischen, gegebenenfalls phosphatierten Substrat mit mindestens drei aufeinanderfolgende Lackschichten bereitzustellen, wobei die erste, auf dem elektrisch leitfähigen Substrat befindliche Schicht aus einem elektrophoretisch abgeschiedenen Überzugsmittel erhältlich ist; die zweite Schicht aus einer Grundierung oder einem Füller erhältlich ist; und die dritte, farbgebende Schicht erhältlich ist aus einer wasserverdünnbaren Beschichtungszusammensetzung, die das Polyesterpolyol enthält.
Entsprechend einer weiteren, ebenfalls erfindungsgemäßen Form handelt es sich um eine Mehrschichtlackierung auf einem metallischen, gegebenenfalls phosphatierten Substrat mit mindestens drei aufeinanderfolgende Lackschichten aufweist, wobei die erste, auf dem elektrisch leitfähigen Substrat befindliche Schicht aus einem elektrophoretisch abgeschiedenen Überzugsmittel erhältlich ist; die zweite Schicht erhältlich ist aus einer wasserverdünnbaren Füllerzusammensetzung, die das Polyesterpolyol enthält; und die dritte, farbgebende Schicht erhältlich ist aus einer wasserverdünnbaren Basislackzusammensetzung.
Eine weitere, ebenfalls erfindungsgemäße Mehrschichtlackierung ist auf einem metallischen, gegebenenfalls phosphatierten Substrat aufgebracht und weist mindestens drei aufeinanderfolgende Lackschichten auf, wobei die erste, auf dem elektrisch leitfähigen Substrat befindliche Schicht aus einem elektropho-retisch abgeschiedenen Überzugsmittel erhältlich ist; die zweite Schicht erhältlich ist aus einer wasserverdünnbaren Füllerzusammensetzung, die das Polyesterpolyol enthält; und die dritte, farbgebende Schicht erhältlich ist aus einer wasserverdünnbaren Beschichtungszusammensetzung, die das Polyesterpolyol enthält.
Die zuvor beschriebenen Mehrschichtlackierungen können noch eine zusätzliche, oberste Schicht aufweisen, die aus Aufbringen und Aushärten eines handelsüblichen Klarlacks erhältlich ist.

Entsprechend einer bevorzugten Ausführungsform der vorliegenden Erfindung ist die OH-Verbindung ein Etherdiol, Polyetherdiol, Urethandiol, Polycaprolactondiol, Polyesterdiol und/oder Polycarbonatdiol.
Besonders bevorzugt handelt es sich bei der OH-Verbindung um ein Polytetrahydrofuran mit einem zahlenmittleren Molekulargewicht von 250. Eine solche Verbindung ist unter der Bezeichnung Terathane® 250 von der Firma DuPont erhältlich.
Der besondere Vorteil ist, daß so ein besonders guter Kompromiss zwischen Härte und Steinschlagbeständigkeit erzielt wird, so daß sich Füllerzusammensetzungen formulieren lassen, die lösemittelbeständig und gut schleifbar sind und trotzdem einen hervorragenden Steinschlagschutz bei der resultierenden Mehrschichtlackierung gewährleisten.

Bei den zuvor beschriebenen Ausführungsformen ist anzumerken, dass die 45 Mol-% der Polycarbonsäure, die Trimellithsäure oder deren Anhydrid sind, sich auf die Menge an Polycarbonsäure beziehen, die bei der Herstellung aus OH-Verbindung und Polycarbonsäure zum erfindungsgemäßen Polyesterpolyol verwendet werden. Diese Menge bezieht sich folglich nicht auf die gesamten, in dem erfindungsgemäßen Polyesterpolyol vorhandenen Polycarbonsäureeinheiten, da letztere beispielsweise auch aus der OH-Verbindung stammen können, falls ein Polyesterdiol als OH-Verbindung zur Herstellung des erfindungsgemäßen Polyesterpolyols verwendet wird.

In einer weiteren Form der vorliegenden Erfindung bestehen 60 bis 100 Mol% der eingesetzten Polycarbonsäure aus Trimellithsäure oder deren Anhydrid.
Solche Polyesterpolyole verleihen Mehrschichtlackierungen unter Verwendung diese enthaltender Beschichtungszusammensetzungen eine nochmals verbesserte Steinschlagbeständigkeit.

Sofern der Anteil an Trimellithsäure weniger als 100 Mol% beträgt, kann die restliche Polycarbonsäure ausgewählt sein aus: Bernsteinsäure, Glutarsäure, Adipinsäure, Azelainsäure, Terephthalsäure, Phthalsäure, Isophthalsäure, Endomethylentetrahydrophthalsäure, 1,2-Cyclohexandicarbonsäure, 1,3-Cyclohexandicarbonsäure, 1,4-Cyclohexandicarbonsäure, Dodecandisäure, Dodecandicarbonsäure; dimere und polymere Fettsäuren, Maleinsäure, Fumarsäure, Itaconsäure, Citraconsäure und Aconitsäure sowie die möglichen Anhydride der zuvor genannten Säuren.

Das durchschnittliche Molekulargewicht aller zur Herstellung des Polyesterpolyols eingesetzten OH-Verbindungen beträgt gemäß einer besonders bevorzugten Ausführungsform der vorliegenden Erfindung mehr als 240, vorzugsweise mehr als 300.

Der Vorteil ist, dass so ein besonders guter Kompromiss zwischen Härte und Steinschlagbeständigkeit zu beobachten ist, so daß sich Füller formulieren lassen, die lösemittelbeständig und gut schleifbar sind und trotzdem einen hervorragenden Steinschlagschutz der resultierenden Mehrschichtlackierung gewährleisten.

Ganz besonders bevorzugt liegt das durchschnittliche Molekulargewicht aller zur Herstellung des Polyesterpolyols eingesetzten OH-Verbindungen unter 650. Ein höheres Molekulargewicht würde einen leicht negativen Einfluß auf die Schleifbarkeit der ausgehärteten Beschichtungszusammensetzung haben.

Entsprechend einer weiteren, ebenfalls bevorzugten und erfindungsgemäßen Form beträgt die Säurezahl nicht mehr als 70 mg KOH/g.
Diese Ausführungsform ist stets dann zu wählen, wenn die entsprechende Beschichtungszusammensetzung eine ausgezeichnete Schwitzwasserbeständigkeit aufweisen soll.

Besonders bevorzugt handelt es sich bei dem Polyesterpolyol um ein solches, welches keine freien und/oder blockierten Isocyanatgruppen aufweist.
Bei den meisten, handelsüblichen blockierten Isocyanaten wird die Vergilbungsbeständigkeit der Beschichtungszusammensetzung stark herabgesetzt. Darüber hinaus ist die Herstellung solcher Verbindungen unter Einhaltung strenger Sicherheitsvorschriften sehr aufwendig, so daß eine Übertragung auf einen industriellen Maßstab sehr erschwert wird.
Angesichts einer immer stärker in das allgemeine Bewußtsein rückenden Umweltproblematik werden solche isocyanatgruppenfreien Polyesterpolyole entsprechend der vorliegenden Erfindung besonders bevorzugt eingesetzt.

In einer weiteren Ausführungsform der vorliegenden Erfindung handelt es sich bei der zu Herstellung des Polyesterpolyols eingesetzten Polycarbonsäure um eine Mischung aus verschiedenen Polycarbonsäuren, enthaltend:
- 50 bis 80 Mol% Trimellithsäure oder deren Anhydrid; und
- 50 bis 20 Mol% einer ungesättigten Dicarbonsäure, insbesondere Maleinsäure, Fumarsäure, Itaconsäure und/oder deren möglichen Anhydride.

Die Verwendung dieser ungesättigten Dicarbonsäure ermöglicht den Einbau polymerisierbarer Doppelbindungen in das erfindungsgemäße Produkt, das hierdurch eine Propfungsreaktion mit weiteren Substanzen (beispielsweise mit vinylischen Verbindungen) eingehen kann.

Entsprechend einer ganz besonders bevorzugten Form der vorliegenden Erfindung ist, das Polyesterpolyol bei der radikalischen Polymerisation in wässriger Phase mindestens einer Verbindung mit mindestens einer polymerisierbaren Doppelbindung zugegen.
Hierunter wird verstanden, dass das erfindungsgemäße Polyesterpolyol in der Reaktionsmischung vorhanden ist, in der die Polymerisation der Monomerverbindungen durchgeführt wird. Das Polyesterpolyol an sich kann durch diese Polymerisation verändert werden oder nicht. Beispielsweise ist es bei Auswahl geeigneter Verbindungen möglich, dass die neben dem Polyesterpolyol in der Reaktionsmischung vorliegende Verbindung mit mindestens einer polymerisierbaren Doppelbindung (d.h. die zu polymerisierende Monomerverbindung) mit der in dem Backbone des Polyesterpolyols eingebauten Doppelbindung, die aus der ungesättigten Polycarbonsäure stammt, zu einem Propfpolymer copolymerisiert. Dieses Propfpolymer kann bei bestimmter Auswahl der zu polymerisierenden Monomerverbindung und entsprechender Anzahl der in dem Backbone des Polyesterpolyols eingebauten Doppelbindungen vernetzt, d.h. unlöslich, sein. Auf diese Weise entstandene vernetzte Mikroteilchen haben einen positiven Einfluß auf die Standfestigkeit sowohl der Füller, als auch der Basislacke, in denen sie enthalten sind. Außerdem unterstützen sie die Ausbildung des Metallikeffektes bei Basislacken. Der Grad der Vernetzung kann gezielt durch Variation des Anteils an Doppelbindungen im Backbone des Polyesterpolyols, der Art und Menge der verwendeten Co-Monomere und dem Neutralisationsgrad gesteuert werden.
Vernetzte Teilchen im erfindungsgemäßen Polyesterpolyol sind dann besonders wünschenswert, wenn die rheologischen Eigenschaften der herzustellenden Beschichtungszusammensetzung im Vordergrund stehen.

Ein weiterer Vorteil ist, dass die auf diese Weise erhältliche Reaktionsmischung, d.h. die wässrige Dispersion aus Polesterpolyol und polymerisierter Verbindung mit mindestens einer polymerisierbaren Doppelbindung, eine deutlich verbesserte Lagerstabilität aufweist. Dabei ist nicht entscheidend, ob die beiden Reaktionspartner miteinander (beispielsweise im Wege einer Pfropfreaktion) reagieren oder nebeneinander in physikalischer Mischung vorliegen.

Das erfindungsgemäße Polyesterpolyol kann in der zu polymerisierenden Verbindung mit mindestens einer polymerisierbaren Doppelbindung, d.h. vor der Überführung in die wässrige Phase, gelöst werden.
Auf diese Weise wird eine wesentlich verbesserte Handhabbarkeit des Polyesters erzielt, d.h. die eigentlich recht hohe Viskosität des Polyesters wird deutlich verringert.

Bemerkenswert im Hinblick auf wasserverdünnbare Füllerzusammensetzungen ist, dass bereits eine Mischung aus 90 Gew.-% des erfindungsgemäßen Polyesterpolyols und 10 % der polymerisierten Monomerverbindung zu einer signifikanten Erhöhung des Festkörperniveaus führt.

Gemäß einer weiteren, bevorzugten Ausführungsform wird als Verbindung mit mindestens einer polymerisierbaren Doppelbindung eine solche verwendet, die nicht in Wasser löslich ist.
Hierdurch wird erreicht, dass die Polymerisation reproduzierbar gesteuert wird.

Der Anteil der Verbindung mit mindestens einer polymerisierbaren Doppelbindung sollte nicht mehr als 30 Gew.% - bezogen auf die gesamte Menge der Polymere - betragen.

Besonders bevorzugte Verbindungen mit mindestens einer polymerisierbaren Doppelbindung sind insbesondere ausgewählt aus der Gruppe von Styrol, α-Methylstyrol, Vinyltoluol und Methyl(meth)acrylat.

Die Verbindung mit mindestens einer polymerisierbaren Doppelbindung kann aber auch mehr als eine polymerisierbare Doppelbindung aufweisen und ist insbesondere ausgewählt aus der Gruppe von Ethylenglykoldi(meth)acrylat, Hexandioldi(meth)acrylat, Allyl(meth)acrylat und Divinylbenzol.
Durch Auswahl dieser Verbindung kann die Vemetzungsdichte kontrolliert erhöht werden.

Als hydroxylgruppenhaltige Monomerverbindungen mit mindestens einer radikalisch polymerisierbaren Doppelbindung sind zu nennen:
- Hydroxyalkylester der Acrylsäure, Methacrylsäure oder einer anderen α,β-olefinisch ungesättigten Carbonsäure, die sich von einem Alkylenglykol ableiten, das mit der Säure verestert ist, oder die durch Umsetzung der α,β-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie z.B. 2-Hydroxyethyl-, 2-Hydroxypropyl-, 3-Hydroxypropyl-, 3-Hydroxybutyl-, 4-Hydroxybutylacrylat, -(meth)acrylat, -ethacrylat, -crotonat, - maleinat, -fumarat oder -itaconat; oder Hydroxycycloalkylester wie 1,4-Bis(hydroxymethyl)cyclohexan-, Octahydro-4,7-methano-1H-inden-dimethanol- oder Methylpropandiolmonoacrylat, -monoethacrylat, -monocrotonat, -monomaleinat, -monofumarat oder -monoitaconat;
- Umsetzungsprodukte aus cyclischen Estern, wie z. B. ε-Caprolacton, und den zuvor beschriebenen Hydroxyalkyl- oder -cycloalkylestem (beispielsweise unter der Bezeichnung Tone® M 100 der Fa. DOW Chemicals erhältlich);
- Polyole wie Trimethylolpropanmono- oder diallylether oder Pentaerythritmono-, -di- oder -triallylether;
- Umsetzungsprodukte aus Acrylsäure und/oder Methacrylsäure mit dem Glycidylester einer in α-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in α-Stellung verzweigten Monocarbonsäure mit 5 bis 18 C-Atomen je Molekül, insbesondere einer Versatic®-Säure, umgesetzt wird.

Monomere mit mindestens einer radikalisch polymerisierbaren Doppelbindung, die keine Hydroxylgruppe aufweisen, sind
- vinylaromatische Verbindungen, wie z.B. Vinyltoluole, α-Methylstyrol, p-, m- oder p-Methylstyrol, 2,5-Dimethylstyrol, p-Methoxystyrol, p-ter.-Butylstyrol, p-Dimethylaminostyrol, p-Acetamidostyrol und m-Vinylphenol, insbesondere bevorzugt Styrol;
- Ester der Acryl- oder Methacrylsäure, wie Methyl(meth)acrylat, Ethyl(meth)-acrylat, Butyl(meth)acrylat, iso-Butyl(meth)acrylat, tert.-Butyl(meth)acrylat, lsopropyl(meth)acrylat, Pentyl(meth)acrylat, Isoamyl(meth)acrylat, Hexyl(meth)-acrylat, α-Ethylhexyl(meth)acrylat, Furfuryl(meth)acrylat, Octyl(meth)acrylat, 3,5,5-Trimetyhlhexyl(meth)acrylat, Decyl(meth)acrylat, Lauryl(meth)acrylat, Hexadecyl(meth)acrylat, Octadecyl(meth)acrylat, Stearyl(meth)acrylat und Ethyhltriglykol(meth)acrylat; Cyclohexyl(meth)acrylat, Isobomyl(meth)acrylat;
- (Meth)Acrylsäureamide wie (Meth)Acrylsäureamid, N-Methyl-, N-Methylol-, N,N-Dimethylol-, N-Methoxymethyl-, N,N-Di(methoxymethyl),-N-Ethoxymethyl- und/oder N,N-Di(ethoxyethyl)-(meth)acrylsäureamid;
- Acryloyloxy- oder Methacryloyloxyethyl-, propyl- oder butylcarbamat oder -allophanat; weitere Beispiele geeigneter Monomere, welche Carbamatgruppen enthalten, werden in den Patentschriften US 3 479 328, US 3 674 838, US 4 126 747, US 4 279 833 oder US 4 340 497 beschrieben;
- Epoxidgruppen enthaltende Monomere wie der Glycidylester der Acrylsäure, Methacrylsäure, Ethacrylsäure, Crotonsäure, Maleinsäure, Fumarsäure oder Itaconsäure oder Allylglycidylether.

Besonders bevorzugt sind Monomere, ausgewählt aus der Gruppe Styrol, Hydroxypropylmethacrylat, Methylmethacrylat.

Bei dem für die vorliegende Erfindung verwendeten Polyesterpolyol handelt es sich um eine Verbindung, die erhältlich ist aus der Polykondensation von mindestens einem Diol mit vorwiegend Trimellithsäure(anhydrid), wobei weniger als 55 Mol-% der eingesetzten Polycarbonsäuren gesättigte oder ungesättigte Dicarbonsäuren oder deren Anhydride sind.
Beispiele für geeigenete Dicarbonsäuren sind aromatische, aliphatische und cycloaliphatische Dicarbonsäuren. Bevorzugt werden aromatische und/oder aliphatische Polycarbonsäuren eingesetzt.
Beispiele für geeignete aromatische Dicarbonsäuren sind Phthalsäure, lsophthalsäure, Terephthalsäure, von denen Isophthalsäure vorteilhaft ist und deshalb bevorzugt verwendet wird.
Beispiele für geeignete acyclische aliphatische oder ungesättigte Polycarbonsäuren sind Oxalsäure, Malonsäure, Bemsteinsäure, Glutarsäure, Adipinsäure, Pimelinsäure, Korksäure, Azelainsäure, Sebacinsäure, Undecandicarbonsäure, Dodecandicarbonsäure, Citronensäure, Weinsäure oder Dimerfettsäuren oder Maleinsäure, Fumarsäure oder Itaconsäure von denen Adipinsäure, Azelainsäure, Sebacinsäure, Dimerfettsäuren, Itaconsäure und Maleinsäure vorteilhaft sind und deshalb bevorzugt verwendet werden.
Beispiele für geeignete cycloaliphatische und cyclische Polycarbonsäuren sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecandicarbonsäure, Tetrahydrophthalsäure oder 4-Methyltetrahydrophthalsäure. Diese Dicarbonsäuren können sowohl in ihrer cis- als auch in ihrer trans-Form sowie als Gemisch beider Formen eingesetzt werden.
Geeignet sind auch die umesterungsfähigen Derivate der obengenannten Polycarbonsäuren, wie z.B. deren ein- oder mehrwertige Ester mit aliphatischen Alkoholen mit 1 bis 4 C-Atomen oder Hydroxyalkoholen mit 1 bis 4 C-Atomen. Außerdem können auch die Anhydride der obengenannten Polycarbonsäuren eingesetzt werden, sofern sie existieren.
Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure, Fettsäuren natürlich vorkommender Öle, Acrylsäure, Methacrylsäure, Ethacrylsäure oder Crotonsäure. Bevorzugt wird als Monocarbonsäure Isononansäure eingesetzt.
Beispiele geeigneter Diole sind Ethylenglykol, 1,2- oder 1,3-Propandiol, 1,2-, 1,3-oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol, die stellungsisomeren Diethyloctandiole, 2-Butyl-2-ethylpropandiol-1,3, 2-Butyl-2-methylpropandiol-1,3, 2-Phenyl-2-methylpropandiol-1,3, ethoxyliertes und/oder propoxyliertes Bisphenol A, hydriertes Bisphenol A, 2-Propyl-2-ethylpropandiol-1,3, 2-Di-tert.-butylpropandiol-1,3, 2-Butyl-2-propylpropandiol-1,3, 1-Dihydroxymethyl-bi-cyclo[2.2.1]heptan, 2,2-Diethylpropandiol-1,3, 2,2-Dipropylpropandiol-1,3, 2-Cyclohexyl-2-methylpropandiol-1,3, 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol oder 1,3-(2'-Hydroxypropyl)-benzol.
Von diesen Diolen sind Hexandiol und 1,4-Cyclohexandimethanol bevorzugt zu nennen.

Als Diole können aber auch Umsetzungsprodukte aus einem Triol und einer Monocarbonsäure verwendet werden.
Als Triole in diesem Zusammenhang sind zu nennen Trimethylolpropan, Glycerin und Tris(hydroxyethyl)isocyanurat.
Bevorzugte Diole sind Polyetherdiole, insbesondere mit einem zahlenmittleren Molekulargewicht von 250 bis 5.000, insbesondere von 250 bis 1000. Gut geeignete Polyetherdiole sind solche mit der allgemeinen Formel H-(-O-(CHR)ₒ-)ₚ-OH, wobei der Substituent R = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherdiole wie Poly(oxyethylen)glykole, Poly-(oxypropylen)glykole und Poly(oxybutylen)glykole genannt.
Die Polyetherdiole sollen einerseits keine übermäßigen Mengen an Ethergruppen einbringen, weil sonst die gebildeten erfindungsgemäß zu verwendenden Polyesterpolyole in Wasser anquellen. Andererseits können sie in Mengen verwendet werden, welche die nichtionische Stabilisierung der Polyester gewährleistet.

Bei den elektrophoretisch abzuscheidenden Überzugsmitteln handelt es sich um wäßrige Beschichtungszusammensetzungen mit einem Festkörper von etwa 10 bis 20 Gew.-%, die üblicherweise Bindemittel, ionische oder in ionische Gruppen überführbare Substituenten sowie zur chemischen Vemetzung fähige Gruppen tragen, sowie Pigmente und weitere übliche Additive enthalten.
Beispiele für solche Elektrotauchlacke sind in DE 28 24 418 A1, DE 33 24 211 A1, EP 0 082 291, EP 0 178 531, EP 0 227 975, EP 0 234 395, EP 0 245 786, EP 0 261 385, EP 0 310 971, EP 0 333 327, EP 0 414 199, EP 0 456 270, EP 0 476 514 und US 3 922 253 beschrieben.

Eine herkömmliche Füllerschicht wird auch als Steinschlagschutzgrundierung oder Funktionsschicht bezeichnet. Beispiele für geeignete Füllerschichten, insbesondere wässrige Füllerschichten, für eine Mehrschichtlackierung werden in den Patentschriften US 4 537 926 A1, EP 0 529 335 A1, EP 0 595 186 A1, EP 0 639 660 A1, DE 44 38 504 A1, DE 43 37 961 A1, WO 89/10387, US 4 450 200 A1, US 4 614 683 A1 oder WO 490/26827 beschrieben.

Eine für die Mehrschichtlackierung geeignete herkömmliche Basislackschicht kann aus den handelsüblichen Basislacken hergestellt werden.
Beispiele für solche Basislacke und deren Komponenten sind beispielsweise aus der EP 0 089 497 A1, EP 0 256 540 A1, EP 0 260 447 A1, EP 0 297 576 A1, WO 96/12747. EP 0 523 610 A1, EP 0 228 003 A1, EP 0 397 806 A1, EP 0 531 510 A1, EP 0 581 211 A1, EP 0 574 417 A1, EP 0 590 484 A1, EP 0 708 788 A1, EP 0 593 454 A1. DE 43 28 092 A1, EP 0 299 148 A1, EP 0 394 737 A1, EP 0 234 362 A1, EP 0 234 361 A1, EP 0 543 817 A1, WO 95/14721, EP 0 521 928 A1, EP 0 522 419 A1, EP 0 522 420 A1, EP 0 649 865 A1, EP 0 536 712 A1, EP 0 596 460 A1, EP 0 596 461 A1, EP 0 584 818 A1, EP 0 669 356 A1, EP 0 634 431 A1, EP 0 678 536 A1, EP 0 354 261 A1, EP 0 424 705 A1, WO 97/49745, WO 97/49747 oder EP 0 401 565 A1 bekannt.

Die Klarlackschicht, die bei einer Mehrschichtlackierung für Automobile über der farbgebenden Basislackschicht angeordnet ist, kann erhalten werden durch Aufbringen und Einbrennen einer üblichen, lösemittelhaltigen oder wäßrigen Klarlackzusammensetzung, die als Einkomponenten- oder Zweikomponentenmischung vorliegt und ein oder mehrere Basisharze als filmbildende Bindemittel enthält. Sofern die Bindemittel nicht selbstvernetzend sind, kann die Klarlackzusammensetzung gegebenenfalls auch Vernetzer enthalten. Als filmbildende Bindemittel (Basisharze) können beispielsweise Polyester-, Polyurethan- und/oder Poly(meth)-acrylatharze verwendet werden.
Neben den chemisch vernetzenden Bindemitteln sowie gegebenenfalls Vernetzern können diese Klarlacke lackübliche Hilfsstoffe, wie z.B. Katalysatoren, Verlaufsmittel und Lichtschutzmittel enthalten.
Beispiele für lösemittelhaltige Klarlackzusammensetzungen in Einkomponenten- oder Zweikomponentenmischung sind in DE 38 26 693 A1, DE 40 17 075 A1, DE 41 24 167 A1, DE 41 33 704 A1; DE 42 04 518 A1, DE 42 04 611 A1, EP 0 257 513, EP 0 408 858, EP 0 523 267 und EP 0 557 822 beschrieben.
Beispiele für wässrige Klarlackzusammensetzungen in Einkomponenten- oder Zweikomponentenmischung sind in DE 39 10 829 A1, DE 40 09 931 A1, DE 40 09 . 932 A1, DE 41 01 696 A1, DE 41 32 430 A1, DE 41 34 290 A1, DE 42 03 510 A1, EP 0 365 098, EP 0 365 775, EP 0 469 079 und EP 0 546 640, insbesondere in der DE 44 19 216 A1 und DE 44 42 518 A1, beschrieben.

Auch kann die Klarlackschicht aus einem Pulverklarlack oder einer Pulverklarlackslurry hergestellt werden.
In bezug auf den Pulverklarlack oder die Pulverklarlackslurry wird auf die DE 42 22 194 A1, DE 42 27 580 A1, EP 0 509 392, EP 0 509 393, EP 0 522 648, EP 0 544 206, EP 0 555 705, EP 0 652 265, EP 0 666 779, sowie auf die EP 0 714 958, verwiesen.

### Bestimmung der Festkörperkonzentration:

Die Festkörperbestimmung wurde im Umluftofen durch Einbrennen bei einer Temperatur von 120°C durchgeführt. Dazu wurden 1 g der zu prüfenden Substanz auf Patentdeckel (Durchmesser 75 mm), gleichmäßig über die Oberfläche verteilt, aufgetragen und eine Stunde im Ofen getrocknet. Der nichtflüchtige Anteil wurde anschließend durch Zurückwiegen der Deckel bestimmt. Es ist eine Dreifachbestimmung durchgeführt worden.

### Bestimmung der Schichtdicke:

Die Bestimmung der Schichtdicke erfolgte unter Verwendung des Geräts Surfix der Fa. Phynix.

### Bestimmung des Glanzgrades:

Die Bestimmung des Glanzgrades erfolgte unter Verwendung des Geräts *hazegloss* der Fa. BYK Gardner unter einem Winkel von 20° und 60°.

### Prüfung auf Steinschlagbeständigkeit:

Als Test zur Überprüfung des Steinschlagschutzes bei Autolacken gibt es verschiedene Methoden, die zwar auf das spezielle Anwendungsgebiet hin angepasst wurden, aber alle darauf abzielen, dass die mechanische Einwirkung möglichst genau reproduziert werden kann.
Die Prüfung der Steinschlagbeständigkeit erfolgte unter Verwendung eines Steinschlagprüfgerätes nach VDA, Modell 508 der Fa. Erichsen GmbH + Co KG.
Die Prüfbleche wurden bei einem Druck von 2 bar 2 mal mit jeweils 500 g abgeschrecktem Eisenschrot "Diamant", eckig, Größe 4-5 mm beschossen.

### Prüfung auf Steinschlagbeständigkeit nach DaimlerChrysler:

Mit einem Kugelstoßprüfgerät der Fa. HK Präzisionstechnik, Obemdorf, wird eine Stahlkugel mit einem Durchmesser von 2 mm und einer Schussgeschwindigkeit von 250 km/h auf die fertige Mehrschichtlackierung bei einer Raumtemperatur von -20 °C geschossen.
Danach wird die Größe der Abplatzung und die entstandene Trennebene bestimmt. Der Test ist nicht bestanden, wenn durch den Beschuß das Stahlsubstrat freigelegt wurde.
Die Abplatzungen von der KTL-Schicht werden in mm² angegeben.

### Prüfung der Wavescan-Werte:

Die Bestimmung der Kurzwelligkeit und der Langwelligkeit der resultierenden Mehrschichtlackierung wird mit einem wave-scan DOI Gerät der Fa. BYK-Gardner, Geretsried, durchgeführt.

### Bestimmung der Pendelhärte nach König:

Die Pendelhärte wurde mit einem pendulum hardness tester der Fa. BYK-Gardner bestimmt.

### Test der Chemikalienbeständigkeit:

### Beständigkeit gegen Bremsflüssigkeit:

Auf ein mit Füller beschichtetes und eingebranntes Prüfblech wird ein Tropfen Bremsflüssigkeit aufgetragen und nach einer Stunde Einwirkung wird die Beschädigung der Lackschicht visuell beurteilt. Die Benotung erfolgt von 1 bis 5, wobei 1 keine Beschädigung bzw. Markierung und 5 eine starke Quellung und Ablösung der Lackschicht bedeutet.

### Beständigkeit gegen Aceton:

Auf ein mit Füller beschichtetes und eingebranntes Prüfblech wird 10 Sekunden lang ein mit Aceton getränkter Wattebausch gedrückt. Anschließend wird mit einem Messer über diese Stelle gekratzt. Die Benotung erfolgt von 1 bis 5, wobei der Unterschied des Kratzers zwischen unbefeuchteter und befeuchteter Stelle beurteilt wird. Die Note 1 bedeutet dabei den geringsten Unterschied, während 5 eine vollständige Enthaftung und Zerstörung der Lackschicht bedeutet.

Die folgenden Beispiele dienen der Erläuterung der Erfindung ohne diese zu begrenzen.

### Herstellung eines Polyesters A1:

In einem Reaktor, ausgestattet mit einem Rührer, einem Wasserabscheider sowie einer Regeleinheit für die Temperatur, wurden 1732 g Terathane® 650 (Polytetramethylenetherglykol mit einer zahlenmittleren Molmasse von 650 g/mol der Firma DuPont) und 307 g Trimellithsäureanhydrid vorgelegt und auf eine Reaktionstemperatur von 185°C erhitzt. Bei Erreichen eines Carboxylgruppengehaltes von 0,713 mmol/g (Säurezahl = 40 mg_{KOH}/g) wird die Reaktionstemperatur auf 175°C gesenkt und die Reaktion bis zu einem Carboxylgruppengehalt von 0,535 mmol/g (Säurezahl = 30 mg_{KOH}/g) weitergeführt. Die Gardner-Viskosität der Harzlösung 60%-ig in Butoxyethanol beträgt zu diesem Zeitpunkt V. Nach Abkühlen der Polyesterschmelze auf 85°C werden 552 g einer 10%-igen wässrigen Dimethylethanolamin-Lösung und anschließend 2390 g deionisiertes Wasser zugegeben. Man erhält eine feinteilige Dispersion mit einem nichtflüchtigen Anteil von 40% und einer Säurezahl von 29 mg_{KOH}/g.

### Herstellung eines Polyesters A2:

In einem Reaktor, ausgestattet mit einem Rührer, einer Füllkörperkolonne sowie einer Temperaturmessung für das Reaktionsgemisch und den Kolonnenkopf, wurden die folgenden Ausgangsprodukte eingewogen: 941 g Terathane® 250 (Polytetramethylenetherglykol mit einer zahlenmittleren Molmasse von 250 g/mol der Firma DuPont), 397 g Bisphenol A/2EO (ethoxyliertes 2,2-Bis(4-hydroxyphenyl)-propan mit einem Molgewicht von 320 g/mol der Firma BASF), 482 g Trimellithsäureanhydrid, 148 g Hexandiol-1,6 und 123 g Maleinsäureanhydrid. Die Reaktionsmischung wurde unter Rühren innerhalb von zwei Stunden auf eine Reaktionstemperatur von 185°C geheizt, ohne dass die Kopftemperatur der Kolonne 100°C übersteigt. Bei Erreichen eines Carboxylgruppengehaltes von 0,713 mmol/g (Säurezahl = 40 mg_{KOH}/g) wird die Reaktionstemperatur auf 180°C gesenkt und die Reaktion bis zu einem Carboxylgruppengehalt von 0,535 mmol/g (Säurezahl = 30 mg_{KOH}/g) weitergeführt. Die Gardner-Viskosität der Harzlösung 60%-ig in Butoxyethanol beträgt zu diesem Zeitpunkt Z. Der erhaltene Polyester wurde auf eine Temperatur von 85°C abgekühlt und durch Zugabe von 552 g einer 10%-igen wässrigen Dimethylethanolamin-Lösung und anschließend 2265 g deionisiertem Wasser dispergiert. Man erhält eine feinteilige Dispersion mit einem nichtflüchtigen Anteil von 40 % und einer Säurezahl von 29 mg_{KOH}/g.

### Herstellung eines Polyesters A3:

In einem Reaktor, ausgestattet mit einem Rührer, einer Füllkörperkolonne sowie einer Temperaturmessung für das Reaktionsgemisch und den Kolonnenkopf, wurden die folgenden Ausgangsprodukte eingewogen: 934 g Terathane® 250 (Polytetramethylenetherglykol mit einer zahlenmittleren Molmasse von 250 g/mol der Firma DuPont), 538 g 1,4-Bis(hydroxy-methyl)-cyclohexan, 538 g Trimellithsäureanhydrid und 91 g Maleinsäureanhydrid. Die Reaktionsmischung wurde unter Rühren innerhalb von zwei Stunden auf eine Reaktionstemperatur von 185°C geheizt, ohne dass die Kopftemperatur der Kolonne 100°C übersteigt. Bei Erreichen eines Carboxylgruppengehaltes von 0,713 mmol/g (Säurezahl = 40 mg_{KOH}/g) wird die Reaktionstemperatur auf 180°C gesenkt und die Reaktion bis zu einem Carboxylgruppengehalt von 0,535 mmol/g (Säurezahl = 30 mg_{KOH}/g) und anschließend bei 175°C bis zu einem Carboxylgruppengehalt von 0,467 mmol/g (Säurezahl = 26 mg_{KOH}/g) weitergeführt. Die Gardner-Viskosität der Harzlösung 60%-ig in Butoxyethanol beträgt zu diesem Zeitpunkt V. Der erhaltene Polyester wurde auf eine Temperatur von 85°C abgekühlt und durch Zugabe von 577 g einer 10%-igen wässrigen Dimethylethanolamin-Lösung und anschließend 2243 g deionisiertem Wasser dispergiert. Man erhält eine feinteilige Dispersion mit einem nichtflüchtigen Anteil von 40 % und einer Säurezahl von 26 mg_{KOH}/g.

### Herstellung eines Polyester-Acrylates B1:

In einem Reaktor werden zu 2000 g der Polyester-Dispersion aus Beispiel A2 und 60 g deionisiertem Wasser unter Rühren eine Mischung aus 142 g Styrol und 48 g Hydroxypropylmethacrylat innerhalb von 20 Minuten zugetropft. In diese Emulsion wird anschließend 30 Minuten lang Stickstoff eingeleitet und 4.7 g einer 0.1%-igen wässrigen Ammoniumeisen-(II)-sulfat-Lösung und 5.7 g einer 10%-igen wässrigen Isoascorbinsäure-Lösung zugegeben. Nach weiteren 20 Minuten werden zu dieser Emulsion 57 g 5%-iges Wasserstoffperoxid innerhalb von 15 Minuten zudosiert. Die Temperatur steigt während dieser Zeit auf 35°C an und wird 45 Minuten bei 45°C gehalten. Nach dieser Zeit ist die Polymerisation vollständig, der Anteil freien Monomers beträgt < 0,1%.
Es wird eine feinteilige, koagulatfreie Dispersion mit einem Feststoffgehalt von 40% erhalten.

### Herstellung eines Polyester-Acrylates B2:

In einem Reaktor werden zu 2000 g der Polyester-Dispersion aus Beispiel A3 und 113.6 g deionisiertem Wasser unter Rühren eine Mischung aus 94 g Styrol, 48 g Butylmethacrylat und 48 g Hydroxypropylmethacrylat innerhalb von 20 Minuten zugetropft. In diese Emulsion wird anschließend 30 Minuten lang Stickstoff eingeleitet und 4.7 g einer 0,1%-igen wässrigen Ammoniumeisen-(II)-sulfat-Lösung und 5,7 g einer 10%-igen wässrigen Isoascorbinsäure-Lösung zugegeben. Nach weiteren 20 Minuten werden zu dieser Emulsion 57 g 5%-iges Wasserstoffperoxid innerhalb von 15 Minuten zudosiert. Die Temperatur steigt während dieser Zeit auf 35°C an und wird 45 Minuten bei 45°C gehalten. Nach dieser Zeit ist die Polymerisation vollständig, der Anteil freien Monomers beträgt < 0,1%.
Es wird eine feinteilige, koagulatfreie Dispersion mit einem Feststoffgehalt von 41% erhalten.

### 1.1 Herstellung einer Füller-Pigmentpaste (anthrazit):

In einem Rührgefäß aus Edelstahl wurden die nachfolgenden Bestandteile in der genannten Reihenfolge eingewogen und nach jeder Zugabe durch Rühren homogenisiert: 346,4 g der Polyester-Dispersion Beispiel A2, 81,2 g deionisiertes Wasser, 2,8 g Dimethylethanolamin, 37,3 g 1,2-Propandiol, 13,2 g Hydropalat 3216 (Netzmittel der Firma Henkel KGaA), 13,2 g Drewplus (Entschäumungsmittel der Firma Drew Industrial), 13,2 g Aerosil R 972 (Produkt der Firma Degussa), 283,0 g Bariumsulfat (Blanc Fixe® micro der Firma Sachtleben Chemie GmbH), 37,3 g Titandioxid (Kronos 2310 der Firma Kronos), und 109,7 g Microtalkum IT extra (Produkt der Firma Norwegian Talc) sowie 17,6 g Printex G (Rußpigment der Firma Degussa). Diese Paste wurde während dreißig Minuten in einem Dissolver vordispergiert und anschließend auf einer Sandmühle auf eine Korn-Feinheit <10 µm gemahlen. Die Temperatur stieg während des Mahlvorgangs nicht über 40°C.

### 1.2 Herstellung eines Füllers:

Der Füller wurde durch Vermischen von 800 g der Pigmentpaste gemäß Beispiel 1.1 mit 642,3 g der Polyester-Acrylat-Dispersion B1, 4 g Dimethylethanolamin, 186 g Cymel 373 (Melaminharz der Firma Cytec), 47,3 g 1,2-Propandiol, 15,8 g Shellsol D70 (Produkt der Firma Shell AG), 40 g N-Methylpyrrolidon, 8,8 g BYK 381 und 8,8 g BYK 346 (Produkte der Firma BYK Chemie) hergestellt. Der pH-Wert wurde mit Dimethylethanolamin auf 8.2 eingestellt. Die Viskosität des Füllers betrug 34 s (DIN4, bei 23°C) bei einem Feststoffgehalt von 54 %.

### 1.3 Vergleichsbeispiel:

Es wurde verfahren wie in der DE 100 09 412 unter Füllerbeispiel 4 beschrieben.

### 1.4 Herstellung einer Pigmentpaste (rot) für einen Uni-Basecoat:

In einem Rührgefäß aus Edelstahl wurden die nachfolgenden Bestandteile in der genannten Reihenfolge eingewogen und nach jeder Zugabe durch Rühren homogenisiert: 287 g der Polyester-Dispersion A3, 144 g deionisiertes Wasser, 2,0 g Dimethylethanolamin, 24,7 g 1,2-Propandiol, 4,4 g BYK 346, 4,4 g BYK 381 (Produkte der Firma BYK Chemie), 134,8 g Irgazin Rot 2030 (Produkt der Firma Ciba Pigments) und 9 g Titandioxid (Kronos 2310 der Firma Kronos). Diese Paste wurde während dreißig Minuten in einem Dissolver vordispergiert und anschließend auf einer Sandmühle auf eine Korn-Feinheit <10 µm gemahlen. Die Temperatur stieg während des Mahlvorgangs nicht über 40°C.

### 1.5 Herstellung eines roten Uni-Basecoats:

Der Uni-Basecoat wurde durch Vermischen von 500 g der Pigmentpaste gemäß Beispiel 1.4 mit 298 g der Polyester-Acrylat-Dispersion B2, 1,5 g Dimethylethanolamin, 126 g deionisiertem Wasser, 4,4 g Surfynol E104 (Netzmittel der Firma Air Products), 110,7 g Cymel 373 (Melaminharz der Firma Cytec) und 138 g Butyldiglykol hergestellt. Der pH-Wert wurde mit Dimethylethanolamin auf 8.2 eingestellt. Die Viskosität des Basecoats betrug 30 s bei einem Feststoffgehalt von 35 %.

### 1.6 Herstellung einer Pigmentpaste (rot) für einen Uni-Basecoat (Vergleichsbeispiel):

In einem Rührgefäß aus Edelstahl wurden die nachfolgenden Bestandteile in der genannten Reihenfolge eingewogen und nach jeder Zugabe durch Rühren homogenisiert: 410 g des in WO 00/63265 A3 beschriebenen Bindemittels Polyurethandispersion 1, 261 g deionisiertes Wasser, 0,5 g Dimethylethanolamin, 24,7 g 1,2-Propandiol, 4,4 g BYK 346, 4,4 g BYK 381 (Produkte der Firma BYK Chemie), 134,8 g Irgazin Rot 2030 (Ciba Pigments) und 9 g Titandioxid (Tiona RCL 568 der Firma Millenium Inorganics). Diese Paste wurde während dreißig Minuten in einem Dissolver vordispergiert und anschließend auf einer Sandmühle auf eine Korn-Feinheit <10 µm gemahlen. Die Temperatur stieg während des Mahlvorgangs nicht über 40°C.

### 1.7 Herstellung eines roten Uni-Basecoats (Vergleichsbeispiel):

Der Uni-Basecoat wurde durch Vermischen von 677 g der Pigmentpaste gemäß Beispiel 1.6 mit 436 g des in WO 00/63265 A3 beschriebenen Bindemittels Polymerdispersion 1, 1.5 g Dimethylethanolamin, 196 g deionisiertem Wasser, 4,4 g Surfynol E104 (Netzmittel - Air Products), 111 g Cymel 373 (Melaminharz der Firma Cytec) und 138 g Butyldiglykol hergestellt. Der pH-Wert wurde mit Dimethylethanolamin auf 8.2 eingestellt. Die Viskosität des Basecoats betrug 31 s bei einem Feststoffgehalt von 27 %.

### 2.1 Applikation der Füller:

Für die Herstellung der Mehrschichtlackierung wurden Prüftafeln aus Karosserieblech verwendet, die mit einer 20 µm dicken Elektrotauchlackierung, hergestellt aus einem handelsüblichen kathionischen Elektrotauchlack, beschichtet waren.

Die Prüftafeln wurden mit den Füllern gemäß Beispiel 1.2 und 1.3 elektrostatisch mit Hochrotationsglocken (Eco-Bell) beschichtet. Die resultierenden Füllerschichten wurden während acht Minuten bei 80°C vorgetrocknet und anschließend jeweils bei 140°C und 165°C während 20 min eingebrannt. Es wurde so verfahren, dass eine Trockenfilmschichtstärke von ca. 35 µm erreicht wurde.

Auf die Füllerschicht wurde ein handelsüblicher konventioneller Unidecklack appliziert und nach einer zehnminütigen Ablüftung während 20 min bei 135°C eingebrannt. Die Unidecklackierung der resultierenden Mehrschichtlackierungen wiesen eine Schichtdicke von 30 µm auf.
Die Prüfergebnisse der so hergestellten Prüflackierungen sind in Tabelle 1 dargestellt.

Die in dieser Weise hergestellten Mehrschichtlackierungen zeigten einen guten optischen Gesamteindruck und eine sehr gute Oberflächenglätte. Die Zwischenschichthaftung sowohl zwischen der Füllerschicht und der Elektrotauchlackierung als auch der Füllerschicht und der Unilackdeckschicht war sehr gut (bestimmt mit Hilfe der Gitterschnittprüfung nach DIN ISO 2409:1994-10: Note 1). Die Prüfung der mechanischen Eigenschaften durch den Kugelstoßtest unter Multistoßbelastung wiesen ein sehr gutes Eigenschaftsprofil auf.

### 2.2 Applikation der Uni-Basecoats

Für die Herstellung der Mehrschichtlackierungen wurden, die in Beispiel 2.1 beschriebenen Bleche mit einer Zweischichtlackierung aus Elektrotauchlack und handelsüblichem Füller verwendet. Auf diese Prüftafeln wurden die Uni-Basecoats aus Herstellbeispiel 1.5 und 1.7 elektrostatisch mit Hochrotationsglocken (Eco-Bell) appliziert und nach einer zweiminütigen Ablüftung bei Raumtemperatur und achtminütiger Vortrocknung bei 80°C ein Pulverklarlack appliziert und während 20 Minuten bei 145°C eingebrannt. Es wurde so verfahren, dass eine Trockenfilmschichtstärke der Basecoats von ca. 20 µm erreicht wurde Die resultierende Pulverklarlackschicht wies eine Schichtdicke von ca. 50 µm auf.
Die Prüfergebnisse der so hergestellten Prüflackierungen sind in Tabelle 3 dargestellt.

**Tabelle 1:**

| **Füllerbeispiel** | **Beispiel 1.1.** ^{**(1)**} | **Vergleichsbeispiel 4** ^{**(2)**} |
|---|---|---|
| **Festkörper [%]** | 54 | 56 |
| **Auslaufzeit 23°C [s] DIN cup 4mm DIN 53211** | 34 | 28 |
| **Pendelhärte nach König [s]** | 140 | 162 |

| | | |
|---|---|---|
| **Beständigkeit:** | | |
| **Bremsflüssigkeit** | | |
| 140°C, 20 min | 1 | 4-5 |
| 165°C, 20 min | 1 | 2 |

| | | |
|---|---|---|
| **Aceton** | | |
| 140°C, 20 min | 1 | 2-3 |
| 165°C, 20 min | 1 | 1-2 |

| | | |
|---|---|---|
| **Schleifbarkeit** | | |
| 140°C, 20 min | ja | nein |
| 165°C, 20 min | ja | ja |

| | | |
|---|---|---|
| **VDA-Multischlag** Kennwerte für Durchschläge | | |
| 140°C, 20 min | 1-2 | 3 |
| 165°C, 20 min | 2 | 1-2 |

| | | |
|---|---|---|
| **Kugelstoß-Test** | | |
| 140°C, 20 min | 5/1 | 5/5 |
| 165°C, 20 min | 7/2 | 7/5 |
| **Glanz 60° nach Gardner [%]** | 74 | 68 |

**Tabelle 2: Decklackstand, Messung mittels Wave-Scan (BYK):**

| **Füllerbeispiel** | **Beispiel 1.1.** ^{**(1)**} | **Vergleichsbeispiel 4** ^{**(2)**} |
|---|---|---|
| Langwelligkeit | 5.5 | 6.0 |
| Kurzwelligkeit | 13.5 | 19.7 |

| | | |
|---|---|---|
| ⁽¹⁾ Beispiel (erfindungsgemäß) | | |
| ⁽²⁾ Vergleichsbeispiel (nicht erfindungsgemäß) aus Offenlegungsschrift DE 100 09 412 A1, Verwendungsbeispiel 4 und 5, Seiten 13-16 | | |

**Tabelle 3: Eigenschaften der Uni-Basecoats:**

| **Basecoat** | **Beispiel 1.5** | **Vergleichsbeispiel 1.7** |
|---|---|---|
| **Festkörper** | 35% | 27% |

| | | |
|---|---|---|
| **Pulverhaftung - Gitterschnitt** | | |
| OEM | GT0 | GT0 |
| Reparatur | GT0 | GT0 |

| | | |
|---|---|---|
| **Decklackstand, Messung mittels Wave-Scan (BYK)** | | |
| Langwelligkeit | 5.5 | 11.3 |
| Kurzwelligkeit | 13.5 | 22.4 |

Die Tabellen zeigen deutlich die verbesserten Eigenschaften der resultierenden Mehrschichtlackierungen unter Verwendung der Beschichtungszusammensetzungen, die das erfindungsgemäße Polyesterpolyol enthalten, verglichen mit solchen des Standes der Technik.

## Patentansprüche

1. Polyesterpolyol, erhältlich aus der Umsetzung mindestens einer Polycarbonsäure oder deren Anhydrid mit mindestens einer OH-Verbindung, **dadurch gekennzeichnet, dass** mehr als 45 Mol% der Polycarbonsäure Trimellithsäure oder deren Anhydrid ist; dass die OH-Verbindung höchstens zwei Hydroxylgruppen pro Molekül aufweist; und dass das durchschnittliche Molekulargewicht aller zur Herstellung des Polyesterpolyols eingesetzten OH-Verbindungen mehr als 210 beträgt.

2. Polyesterpolyol nach Anspruch 1, **dadurch gekennzeichnet, dass** die OH-Verbindung ein Etherdiol, Polyetherdiol, Urethandiol, Polycaprolactondiol, Polyesterdiol und/oder Polycarbonatdiol ist.

3. Polyesterpolyol nach Anspruch 2, **dadurch gekennzeichnet, dass** die OH-Verbindung Polytetrahydrofuran mit einem zahlenmittleren Molekurargewicht von 250 ist.

4. Polyesterpolyol nach einem der vorhergehenden Ansprüche, **dadurch gekennzeichnet, dass** 60 bis 100 Mol% der eingesetzten Polycarbonsäure Trimellithsäure oder deren Anhydrid ist.

5. Polyesterpolyol nach einem der vorhergehenden Ansprüche, **dadurch gekennzeichnet, dass** das durchschnittliche Molekulargewicht aller zur Herstellung des Polyesterpolyols eingesetzten OH-Verbindungen mehr als 240, vorzugsweise mehr als 300, beträgt.

6. Polyesterpolyol nach einem der vorhergehenden Ansprüche, **dadurch gekennzeichnet, dass** das durchschnittliche Molekulargewicht aller zur Herstellung des Polyesterpolyols eingesetzten OH-Verbindungen nicht mehr als 650 beträgt.

7. Polyesterpolyol nach einem der vorhergehenden Ansprüche, **dadurch gekennzeichnet, dass** die Säurezahl nicht mehr als 70 beträgt.

8. Polyesterpolyol nach einem der vorhergehenden Ansprüche, **dadurch gekennzeichnet, dass** es keine freien und/oder blockierten Isocyanatgruppen aufweist.

9. Polyesterpolyol nach einem der vorhergehenden Ansprüche, **dadurch gekennzeichnet, dass** die zur Herstellung des Polyesterpolyols verwendete Polycarbonsäure eine Mischung ist, enthaltend:
• 50 bis 80 Mol% Trimellithsäure oder deren Anhydrid; und
• 50 bis 20 Mol% einer ungesättigten Dicarbonsäure, insbesondere Maleinsäure, Fumarsäure, Itaconsäure und/oder deren möglichen Anhydride.

10. Polyesterpolyol nach Anspruch 9, **dadurch gekennzeichnet, dass** das Polyesterpolyol bei der radikalischen Polymerisation in wässriger Phase mindestens einer Verbindung mit mindestens einer polymerisierbaren Doppelbindung zugegen ist.

11. Polyesterpolyol nach Anspruch 10, **dadurch gekennzeichnet, dass** die Verbindung mit mindestens einer polymerisierbaren Doppelbindung nicht in Wasser löslich ist.

12. Polyesterpolyol nach Anspruch 10 oder 11, **dadurch gekennzeichnet, dass** der Anteil der Verbindung mit mindestens einer polymerisierbaren Doppelbindung nicht mehr als 30 Gew.% - bezogen auf die gesamte Menge der Polymere - beträgt.

13. Polyesterpolyol nach einem der Ansprüche 10 bis 12, **dadurch gekennzeichnet, dass** die Verbindung mit mindestens einer polymerisierbaren Doppelbindung ausgewählt ist aus der Gruppe von Styrol, α-Methylstyrol, Vinyltoluol und Methyl(meth)acrylat.

14. Polyesterpolyol nach einem der Ansprüche 10 bis 12, **dadurch gekennzeichnet, dass** die Verbindung mit mindestens einer polymerisierbaren Doppelbindung mehr als eine polymerisierbare Doppelbindung aufweist und insbesondere ausgewählt ist aus der Gruppe von Ethylenglykoldi(meth)acrylat, Hexandioldi(meth)acrylat, Allyl(meth)acrylat und Divinylbenzol.

15. Verfahren zur Verbesserung dekorativer Eigenschaften wasserverdünnbarer Beschichtungszusammensetzungen, **dadurch gekennzeichnet, dass** der applikationsfertige Lack mehr als 20 Gew.-%, bezogen auf den Festharzanteil des applikationsfertigen Lacks, eines Polyesterpolyols mit einer Säurezahl von mehr als 15 enthält, letzteres erhältlich aus der Umsetzung mindestens einer Polycarbonsäure oder deren Anhydrid mit mindestens einer OH-Verbindung, **dadurch gekennzeichnet, dass** mehr als 45 Mol% der Polycarbonsäure Trimellithsäure oder deren Anhydrid ist; dass die OH-Verbindung höchstens zwei Hydroxylgruppen pro Molekül aufweist; und dass das durchschnittliche Molekulargewicht aller zur Herstellung des Polyesterpolyols eingesetzten OH-Verbindungen mehr als 210 beträgt.

16. Verfahren nach Anspruch 15, **dadurch gekennzeichnet, dass** die OH-Verbindung ein Etherdiol, Polyetherdiol, Urethandiol, Polycaprolactondiol, Polyesterdiol und/oder Polycarbonatdiol ist.

17. Verfahren nach Anspruch 16, **dadurch gekennzeichnet, dass** die OH-Verbindung Polytetrahydrofuran mit einem zahlenmittleren Molekurargewicht von 250 ist.

18. Verfahren nach Anspruch 15, **dadurch gekennzeichnet, dass** 60 bis 100 Mol% der eingesetzten Polycarbonsäure Trimellithsäure oder deren Anhydrid ist.

19. Verfahren nach einem der Ansprüche 15 bis 19, **dadurch gekennzeichnet, dass** das durchschnittliche Molekulargewicht aller zur Herstellung des Polyesterpolyols eingesetzten OH-Verbindungen mehr als 240, vorzugsweise mehr als 300, beträgt.

20. Verfahren nach einem der Ansprüche 15 bis 19, **dadurch gekennzeichnet, dass** das durchschnittliche Molekulargewicht aller zur Herstellung des Polyesterpolyols eingesetzten OH-Verbindungen nicht mehr als 650 beträgt.

21. Verfahren nach einem der Ansprüche 15 bis 20, **dadurch gekennzeichnet, dass** die Säurezahl nicht mehr als 70 beträgt.

22. Verfahren nach einem der Ansprüche 15 bis 21, **dadurch gekennzeichnet, dass** es keine freien und/oder blockierten Isocyanatgruppen aufweist.

23. Verfahren nach einem der Ansprüche 15 bis 22, **dadurch gekennzeichnet, dass** die zur Herstellung des Polyesterpolyols verwendete Polycarbonsäure eine Mischung ist, enthaltend:
• 50 bis 80 Mol% Trimellithsäure oder deren Anhydrid; und
• 50 bis 20 Mol% einer ungesättigten Dicarbonsäure, insbesondere Maleinsäure, Fumarsäure, Itaconsäure und/oder deren möglichen Anhydride.

24. Verfahren nach einem der Ansprüche 15 bis 23, **dadurch gekennzeichnet, dass** das Polyesterpolyol bei der radikalischen Polymerisation in wässriger Phase mindestens einer ungesättigten Verbindung mit mindestens einer polymerisierbaren Doppelbindung zugegen ist.

25. Verfahren nach Anspruch 24, **dadurch gekennzeichnet, dass** die ungesättigte Verbindung mit mindestens einer polymerisierbaren Doppelbindung nicht in Wasser löslich ist.

26. Verfahren nach Anspruch 24 oder 25, **dadurch gekennzeichnet, dass** der Anteil der ungesättigten Verbindung mit mindestens einer polymerisierbaren Doppelbindung nicht mehr als 30 Gew.-% - bezogen auf die gesamte Menge der Polymere - beträgt.

27. Verfahren nach einem der Ansprüche 24 bis 26, **dadurch gekennzeichnet, dass** die ungesättigte Verbindung mit mindestens einer polymerisierbaren Doppelbindung ausgewählt ist aus der Gruppe von Styrol, α-Methylstyrol, Vinyltoluol und Methyl-(meth)acrylat.

28. Verfahren nach einem der Ansprüche 24 bis 26, **dadurch gekennzeichnet, dass** die ungesättigte Verbindung mit mindestens einer polymerisierbaren Doppelbindung mehr als eine polymerisierbare Doppelbindung aufweist und insbesondere ausgewählt ist aus der Gruppe von Ethylenglykoldi(meth)acrylat, Hexandioldi(meth)acrylat, Allyl(meth)acrylat und Divinylbenzol.

29. Verwendung eines Polyesterpolyols, erhältlich aus der Umsetzung mindestens einer Polycarbonsäure oder deren Anhydrid mit mindestens einer OH-Verbindung, wobei mehr als 45 Mol% der Polycarbonsäure Trimellithsäure oder deren Anhydrid ist; dass die OH-Verbindung höchstens zwei Hydroxylgruppen pro Molekül aufweist; und dass das durchschnittliche Molekulargewicht aller zur Herstellung des Polyesterpolyols eingesetzten OH-Verbindungen mehr als 210 beträgt, in einer Mehrschichtfackierung, insbesondere in der Automobilserienlackierung.

30. Verwendung nach Anspruch 29, **dadurch gekennzeichnet, dass** die Mehrschichtlackierung auf einem metallischen, gegebenenfalls phosphatierten Substrat aufgebracht ist und mindestens zwei aufeinanderfolgende Lackschichten aufweist, wobei die erste, auf dem elektrisch leitfähigen Substrat befindliche Schicht aus einem elektrophoretisch abgeschiedenen Überzugsmittel erhältlich ist; und die zweite, farbgebende Schicht erhältlich ist aus einer wasserverdünnbaren Beschichtungszusammensetzung, die das Polyesterpolyol enthält.

31. Verwendung nach Anspruch 29, **dadurch gekennzeichnet, dass** die Mehrschichtlackierung auf einem metallischen, gegebenenfalls phosphatierten Substrat aufgebracht ist und mindestens drei aufeinanderfolgende Lackschichten aufweist, wobei die erste, auf dem elektrisch leitfähigen Substrat befindliche Schicht aus einem elektrophoretisch abgeschiedenen Überzugsmittel erhältlich ist; die zweite Schicht aus einer Grundierung oder einem Füller erhältlich ist; und die dritte, farbgebende Schicht erhältlich ist aus einer wasserverdünnbaren Beschichtungszusammensetzung, die das Polyesterpolyol enthält.

32. Verwendung nach Anspruch 29, **dadurch gekennzeichnet, dass** die Mehrschichtlackierung auf einem metallischen, gegebenenfalls phosphatierten Substrat aufgebracht ist und mindestens drei aufeinanderfolgende Lackschichten aufweist, wobei die erste, auf dem elektrisch leitfähigen Substrat befindliche Schicht aus einem elektrophoretisch abgeschiedenen Überzugsmittel erhältlich ist; die zweite Schicht erhältlich ist aus einer wasserverdünnbaren Füllerzusammensetzung, die das Polyesterpolyol enthält; und die dritte, farbgebende Schicht erhältlich ist aus einer wasserverdünnbaren Basislackzusammensetzung.

33. Verwendung nach Anspruch 29, **dadurch gekennzeichnet, dass** die Mehrschichtlackierung auf einem metallischen, gegebenenfalls phosphatierten Substrat aufgebracht ist und mindestens drei aufeinanderfolgende Lackschichten aufweist, wobei die erste, auf dem elektrisch leitfähigen Substrat befindliche Schicht aus einem elektrophoretisch abgeschiedenen Überzugsmittel erhältlich ist; die zweite Schicht erhältlich ist aus einer wasserverdünnbaren Füllerzusammensetzung, die das Polyesterpolyol enthält; und die dritte, farbgebende Schicht erhältlich ist aus einer wasserverdünnbaren Beschichtungszusammensetzung, die das Polyesterpolyol enthält.

34. Verwendung nach einem der Ansprüche 30 bis 33, **dadurch gekennzeichnet, dass** die Mehrschichtlackierung eine zusätzliche, oberste Schicht aufweist, erhältlich aus einem Klarlack.

35. Verwendung nach einem der Ansprüche 29 bis 34, **dadurch gekennzeichnet, dass** die OH-Verbindung ein Etherdiol, Polyetherdiol, Urethandiol, Polycaprolactondiol, Polyesterdiol und/oder Polycarbonatdiol ist.

36. Verwendung nach Anspruch 35, **dadurch gekennzeichnet, dass** die OH-Verbindung Polytetrahydrofuran mit einem zahlenmittleren Molekurargewicht von 250 ist.

37. Verwendung nach einem der Ansprüche 29 bis 36, **dadurch gekennzeichnet, dass** 60 bis 100 Mol% der eingesetzten Polycarbonsäure Trimellithsäure oder deren Anhydrid ist.

38. Verwendung nach einem der Ansprüche 29 bis 37, **dadurch gekennzeichnet, dass** das durchschnittliche Molekulargewicht aller zur Herstellung des Polyesterpolyols eingesetzten OH-Verbindungen mehr als 240, vorzugsweise mehr als 300, beträgt.

39. Verwendung nach einem der Ansprüche 29 bis 38, **dadurch gekennzeichnet, dass** das durchschnittliche Molekulargewicht aller zur Herstellung des Polyesterpolyols eingesetzten OH-Verbindungen nicht mehr als 650 beträgt.

40. Verwendung nach einem der Ansprüche 29 bis 39, **dadurch gekennzeichnet, dass** die Säurezahl nicht mehr als 70 beträgt.

41. Verwendung nach einem der Ansprüche 29 bis 40, **dadurch gekennzeichnet, dass** das Polyesterpolyol keine freien und/oder blockierten Isocyanatgruppen aufweist.

42. Verwendung nach einem der Ansprüche 29 bis 41, **dadurch gekennzeichnet, dass** die zur Herstellung des Polyesterpolyols verwendete Polycarbonsäure eine Mischung ist, enthaltend:
• 50 bis 80 Mol% Trimellithsäure oder deren Anhydrid; und
• 50 bis 20 Mol% einer ungesättigten Dicarbonsäure, insbesondere Maleinsäure, Fumarsäure, Itaconsäure und/oder deren möglichen Anhydride.

43. Verwendung nach einem der Ansprüche 29 bis 42, **dadurch gekennzeichnet, dass** das Polyesterpolyol bei der radikalischen Polymerisation in wässriger Phase mindestens einer ungesättigten Verbindung mit mindestens einer polymerisierbaren Doppelbindung zugegen ist.

44. Verwendung nach Anspruch 43, **dadurch gekennzeichnet, dass** die ungesättigte Verbindung mit mindestens einer polymerisierbaren Doppelbindung nicht in Wasser löslich ist.

45. Verwendung nach Anspruch 43 oder 44, **dadurch gekennzeichnet, dass** der Anteil der ungesättigten Verbindung mit mindestens einer polymerisierbaren Doppelbindung nicht mehr als 30 Gew.-% - bezogen auf die gesamte Menge der Polymere - beträgt.

46. Verwendung nach einem der Ansprüche 43 bis 45, **dadurch gekennzeichnet, dass** die ungesättigte Verbindung mit mindestens einer polymerisierbaren Doppelbindung ausgewählt ist aus der Gruppe von Styrol, α-Methylstyrol, Vinyltoluol und Methyl(meth)-acrylat.

47. Verwendung nach einem der Ansprüche 43 bis 45, **dadurch gekennzeichnet, dass** die ungesättigte Verbindung mit mindestens einer polymerisierbaren Doppelbindung mehr als eine polymerisierbare Doppelbindung aufweist und insbesondere ausgewählt ist aus der Gruppe von Ethylenglykoldi(meth)acrylat, Hexandioldi(meth)acrylat, Allyl(meth)acrylat und Divinylbenzol.

## Claims

1. Polyester polyol obtainable from the reaction of at least one polycarboxylic acid or its anhydride with at least one OH compound **characterised in that** more than 45 mole % of the polycarboxylic acid is trimellitic acid or its anhydride; that the OH compound exhibits at most two hydroxyl groups per molecule; and that the average molecular weight of all the OH compounds used for the production of the polyester polyol is more than 210.

2. Polyester polyol according to claim 1 **characterised in that** the OH compound is an ether diol, polyether diol, urethane diol, polycaprolactone diol, polyester diol and/or polycarbonate diol.

3. Polyester polyol according to claim 2 **characterised in that** the OH compound is polytetrahydrofuran with a number average molecular weight of 250.

4. Polyester polyol according to one of the preceding claims **characterised in that** 60 to 100 mole % of the polycarboxylic acid used is trimellitic acid or its anhydride.

5. Polyester polyol according to one of the preceding claims **characterised in that** the average molecular weight of all the OH compounds used for the production of the polyester polyol is more than 240, preferably more than 300.

6. Polyester polyol according to one of the preceding claims **characterised in that** the average molecular weight of all the OH compounds used for the production of the polyester polyol is not more than 650.

7. Polyester polyol according to one of the preceding claims **characterised in that** the acid number is not more than 70.

8. Polyester polyol according to one of the preceding claims **characterised in that** it exhibits no free and/or blocked isocyanate groups.

9. Polyester polyol according to one of the preceding claims **characterised in that** the polycarboxylic acid used for the production of the polyester polyol is a mixture containing:
• 50 to 80 mole % of trimellitic acid or its anhydride; and
• 50 to 20 mole % of an unsaturated dicarboxylic acid, in particular maleic acid, fumaric acid, itaconic acid and/or their possible anhydrides.

10. Polyester polyol according to claim 9 **characterised in that**, during the radical polymerisation in the aqueous phase, the polyester polyol of at least one compound with at least one polymerisable double bond is present.

11. Polyester polyol according to claim 10 **characterised in that** the compound with at least one polymerisable double bonds is not soluble in water.

12. Polyester polyol according to claim 10 or 11 **characterised in that** the proportion of the compound with at least one polymerisable double bond amounts to not more than 30 % by weight - based on the total quantity of the polymers.

13. Polyester polyol according to one of claims 10 to 12 **characterised in that** the compound with at least one polymerisable double bond is selected from the group of styrene, α-methyl styrene, vinyl toluene and methyl (meth)acrylate.

14. Polyester polyol according to one claims 10 to 12 **characterised in that** the compound with at least one polymerisable double bond exhibits more than one polymerisable double bond and is selected, in particular, from the group of ethylene glycol di(meth)acrylate, hexane diol di(meth)acrylate, allyl (meth)acrylate and divinylbenzene.

15. Process for improving the decorative properties of water-thinnable coating compositions **characterised in that** the paint ready for application contains more than 20% by weight, based on the solid resin content of the paint ready for application, of a polyester polyol with an acid number of more than 15, the latter being obtainable from the reaction of at least one polycarboxylic acid or its anhydride with at least one OH compound **characterised in that** it exhibits more than 45 mole % of the polycarboxylic acid trimellitic acid or its anhydride; that the OH compound exhibits at most two hydroxyl groups per molecule; and that the average molecular weight of all the OH compounds used for the production of the polyester polyol is more than 210.

16. Process according to claim 15 **characterised in that** the OH compound is an ether diol, polyether diol, urethane diol, polycaprolactone diol, polyester diol and/or polycarbonate diol.

17. Process according to claim 16 **characterised in that** the OH compound is polytetrahydrofuran with a number average molecular weight of 250.

18. Process according to claim 15 **characterised in that** 60 to 100 mole % of the polycarboxylic acid used is trimellitic acid or its anhydride.

19. Process according to one of claims 15 to 19 **characterised in that** the average molecular weight of all the OH compounds used for the production of the polyester polyol is more than 240, preferably more than 300.

20. Process according to one of claims 15 to 19 **characterised in that** the average molecular weight of all the OH compounds used for the production of the polyester polyol is not more than 650.

21. Process according to one of claims 15 to 20 **characterised in that** the acid number is not more than 70.

22. Process according to one of claims 15 to 21 **characterised in that** it exhibits no free and/or blocked isocyanate groups.

23. Process according to one of claims 15 to 22 **characterised in that** the polycarboxylic acid used for the production of the polyester polyol is a mixture containing:
• 50 to 80 mole % of trimellitic acid or its anhydride; and
• 50 to 20 mole % of an unsaturated dicarboxylic acid, in particular maleic acid, fumaric acid, itaconic acid and/or their possible anhydrides.

24. Process according to one of claims 15 to 23 **characterised in that**, during the radical polymerisation in the aqueous phase, the polyester polyol of at least one unsaturated compound with at least one polymerisable double bond is present.

25. Process according to claim 24 **characterised in that** the unsaturated compound with at least one polymerisable double bonds is not soluble in water.

26. Process according to claim 24 or 25 **characterised in that** the proportion of the unsaturated compound with at least one polymerisable double bond amounts to not more than 30 % by weight - based on the total quantity of the polymers.

27. Process according to one of claims 24 to 26 **characterised in that** the unsaturated compound with at least one polymerisable double bond is selected from the group of styrene, α-methyl styrene, vinyl toluene and methyl (meth)acrylate.

28. Process according to one claims 24 to 26 **characterised in that** the unsaturated compound with at least one polymerisable double bond exhibits more than one polymerisable double bond and is selected, in particular, from the group of ethylene glycol di(meth)acrylate, hexane diol di(meth)acrylate, allyl (meth)acrylate and divinylbenzene.

29. Use of a polyester polyol obtainable from the reaction of at least one polycarboxylic acid or its anhydride with at least one OH compound, more than 45 mole % of the polycarboxylic acid being trimellitic acid or its anhydride; that the OH compound exhibits at most two hydroxyl groups per molecule; and that the average molecular weight of all the OH compounds used for the production of the polyester polyol is more than 210 in a multi-layer paint coat, in particular in motor vehicle paint coating in series.

30. Use according to claim 29 **characterised in that** the multi-layer paint coat is applied onto a metallic, if necessary phosphated, substrate and exhibits at least two consecutive paint coats, the first coat present on the electrically conductive substrate being obtainable from an electrophoretically deposited finishing coating agent; and the second colour-providing coat being obtainable from a waler-thinnable coating composition containing the polyester polyol.

31. Use according to claim 29 **characterised in that** the multi-layer paint coat is applied onto a metallic, if necessary phosphated, substrate and exhibits at least three consecutive paint coats, the first coat present on the electrically conductive substrate being obtainable from an electrophoretically deposited finishing coating agent; the second coat being obtainable from a primer or a filler; and the third colour-providing coat being obtainable from a water-thinnable coating composition containing the polyester polyol.

32. Use according to claim 29 **characterised in that that** the multi-layer paint coat is applied onto a metallic, if necessary phosphated, substrate and exhibits at least three consecutive paint coats, the first coat present on the electrically conductive substrate being obtainable from an electrophoretically deposited finishing coating agent; the second coat being obtainable from a water-thinnable filler composition containing the polyester polyol; and the third colour-providing coat being obtainable from a water-thinnable base coat composition.

33. Use according to claim 29 **characterised in that characterised in that** the multi-layer paint coat is applied onto a metallic, if necessary phosphated, substrate and exhibits at least three consecutive paint coats, the first coat present on the electrically conductive substrate being obtainable from an electrophoretically deposited finishing coating agent; the second coat being obtainable from a water-thinnable filler composition containing the polyester polyol ; and the third colour-providing coat being obtainable from a water-thinnable coating composition containing the polyester polyol.

34. Use according to one of claims 30 to 33 **characterised in that** the multi-layer paint coat exhibits an additional upper-most layer obtainable from a clear coating compound.

35. Use according to one of claims 29 to 34 **characterised in that** the OH compound is an ether diol, polyether diol, urethane diol, polycaprolactone diol, polyester diol and/or polycarbonate diol.

36. Use according to claim 35 **characterised in that** the OH compound is polytetrahydrofuran with a number average molecular weight of 250.

37. Use according to one of claims 29 to 36 **characterised in that** 60 to 100 mole % of the polycarboxylic acid used is trimellitic acid or its anhydride.

38. Use according to one of claims 29 to 37 **characterised in that** the average molecular weight of all the OH compounds used for the production of the polyester polyol is more than 240, preferably more than 300.

39. Use according to one of claims 29 to 38 **characterised in that** the average molecular weight of all the OH compounds used for the production of the polyester polyol is not more than 650.

40. Use according to one of claims 29 to 39 **characterised in that** the acid number is not more than 70.

41. Use according to one of claims 29 to 40 **characterised in that** the polyester polyol exhibits no free and/or blocked isocyanate groups.

42. Use according to one of the preceding claims 29 to 41 **characterised in that** the polycarboxylic acid used for the production of the polyester polyol is a mixture containing:
• 50 to 80 mole % of trimellitic acid or its anhydride; and
• 50 to 20 mole % of an unsaturated dicarboxylic acid, in particular maleic acid, fumaric acid, itaconic acid and/or their possible anhydrides.

43. Use according to one of claim 29 to 42 **characterised In that**, during the radical polymerisation in the aqueous phase, the polyester polyol of at least one compound with at least one polymerisable double bond is present

44. Use according to claim 43 **characterised in that** the unsaturated compound with at least one polymerisable double bonds is not soluble in water.

45. Use according to claim 43 or 44 **characterised in that** the proportion of the unsaturated compound with at least one polymerisable double bond amounts to not more than 30 % by weight - based on the total quantity of the polymers.

46. Use according to one of claims 43 to 45 **characterised in that** the unsaturated compound with at least one polymerisable double bond is selected from the group of styrene, α-methyl styrene, vinyl toluene and methyl (meth)acrylate.

47. Use according to one claims 43 to 45 **characterised in that** the unsaturated compound with at least one polymerisable double bond exhibits more than one polymerisable double bond and is selected, in particular, from the group of ethylene glycol di(meth)acrylate, hexane diol di(meth)acrylate, allyl (meth)acrylate and divinylbenzene.

## Revendications

1. Polyesterpolyol, pouvant être obtenu à partir de la réaction d'au moins un acide polycarbonique ou de son anhydride avec au moins un composé OH, **caractérisé en ce que** plus de 45 % de l'acide polycarbonique est l'acide trimellitique ou son anhydride; que le composé OH présente tout au plus deux groupes hydroxyles par molécule; et **en ce que** la masse moléculaire moyenne de tous les composés mis en oeuvre pour fabriquer le polyesterpolyol est supérieure à 210.

2. Polyesterpolyol selon la revendication 1, **caractérisé en ce que** le composé OH est un éther-diol, polyéther-diol, uréthane-diol, polycaprolactone-diol, polyesterdiol et/ou un polycarbonate-diol.

3. Polyesterpolyol selon la revendication 2, **caractérisé en ce que** le composé OH est un polytétrahydrofurane d'une masse moléculaire moyenne de 250.

4. Polyesterpolyol selon l'une des revendications précédentes, **caractérisé en ce que** 60 à 100 % en mole de l'acide polycarbonique mis en oeuvre est l'acide trimellitique ou son anhydride.

5. Polyesterpolyol selon l'une des revendications précédentes, **caractérisé en ce que** la masse moléculaire moyenne de tous les composés OH mis en oeuvre pour fabriquer le polyesterpolyol est supérieure à 240, de préférence à 300.

6. Polyesterpolyol selon l'une des revendications précédentes, **caractérisé en ce que** la masse moléculaire de tous les composés OH mis en oeuvre pour fabriquer le polyesterpolyol ne dépasse pas 650.

7. Polyesterpolyol selon l'une des revendications précédentes, **caractérisé en ce que** l'indice d'acidité ne dépasse pas 70.

8. Polyesterpolyol selon l'une des revendications précédentes, **caractérisé en ce qu'**il ne présente pas de groupes isocyanates libres et/ou en bloc.

9. Polyesterpolyol selon l'une des revendications précédentes, **caractérisé en ce que** l'acide polycarbonique utilisé pour préparer le polyesterpolyol est un mélange contenant :
• 50 à 80 % en mole d'acide trimellitique ou de son anhydride; et
• 50 à 20 % en mole d'un acide dicarbonique insaturé, en particulier l'acide maléique, l'acide fumarique, l'acide itaconique et/ou leur anhydrides possibles.

10. Polyesterpolyol selon la revendication 9, **caractérisé en ce que** le polyesterpolyol est présent lors de la polymérisation radicalique en phase aqueuse d'au moins un composé ayant au moins une double-liaison polymérisable.

11. Polyesterpolyol selon la revendication 10, **caractérisé en ce que** le composé ayant au moins une double-liaison polymérisable n'est pas soluble dans l'eau.

12. Poylesterpolyol selon l'une des revendications 10 ou 11, **caractérisé en ce que** le taux du composé ayant au moins une double-liaison polymérisable ne dépasse pas 30 % en poids - par rapport à la quantité totale de polymères.

13. Polylesterpolyol selon l'une des revendications 10 à 12, **caractérisé en ce que** le composé ayant au moins une double-liaison polymérisable est choisi dans le groupe du styrène, α-méthylstyrène, toluène de vinyle et (méth)acrylate de méthyle.

14. Polyesterpolyol selon l'une des revendications 10 à 12, **caractérisé en ce que** le composé ayant au moins une double-liaison polymérisable présente plus d'une double-liaison et est en particulier choisi dans le groupe du di(méth)acrylate d'éthylène-glycol, (méth)acrylate d'hexane-diol, (méth)acrylate d'hexane-diol, (méth)acrylate allylique et benzène divinylique.

15. Procédé d'amélioration des propriétés décoratives des enduits de revêtement hydrosolubles, **caractérisé en ce que** le vernis prêt à être appliqué contient plus de 20 % en poids, par rapport au taux de résine solide du vernis prêt à être appliqué, d'un polyesterpolyol ayant un indice d'acidité supérieur à 15, ce dernier pouvant être obtenu à partir de la réaction d'au moins un acide polycarbonique ou de son anhydride contenant au moins un composé OH, **caractérisé en ce que** plus de 45 % en mole de l'acide polycarbonique est l'acide trimellitique ou son anhydride ; que le composé OH présente tout au plus deux groupe hydroxyles par molécule; et que la masse moléculaire moyenne de tous les composés OH mis en oeuvre pour fabriquer le polyesterpolyol est supérieure à 210.

16. Procédé selon la revendication 15, **caractérisé en ce que** le composé OH est un éther-diol, un polyéther-diol, uréthane-diol, polycaprolactone-diol, polyester-diol et/ou polycarbonate-diol.

17. Procédé selon la revendication 16, **caractérisé en ce que** le composé OH est le polytétrahydrofurane d'une masse moléculaire moyenne de 250.

18. Procédé selon la revendication 15, **caractérisé en ce que** 60 à 100 % en mole de l'acide polycarbonique mis en oeuvre est l'acide trimellitique ou son anhydride.

19. Procédé selon l'une des revendications 15 à 19, **caractérisé en ce que** la masse moléculaire moyenne de tous les composés OH mis en oeuvre pour fabriquer le polyesterpolyol est supérieure à 240, de préférence à 300.

20. Procédé selon l'une des revendications 15 à 19, **caractérisé en ce que** la masse moléculaire moyenne de tous les composés OH mis en oeuvre pour fabriquer le polyesterpolyol ne dépasse pas 650.

21. Procédé selon l'une des revendications 15 à 20, **caractérisé en ce que** l'indice d'acidité ne dépasse pas 70.

22. Procédé selon l'une des revendications 15 à 21, **caractérisé en ce qu'**il ne présente pas de groupes isocyanates libres et/ou en bloc.

23. Procédé selon l'une des revendications 15 à 22, **caractérisé en ce que** l'acide polycarbonique utilisé pour fabriquer le polyesterpolyol est un mélange contenant :
• 50 à 80 % en mole d'acide trimellitique ou de son anhydride; et
• 50 à 20 % en mole d'un acide dicarbonique insaturé, en particulier l'acide maléique, l'acide fumarique, l'acide itaconique et/ou leur anhydrides possibles.

24. Procédé selon l'une des revendications 15 à 23, **caractérisé en ce que** le polyesterpolyol est présent lors de la polymérisation radicalique en phase aqueuse d'au moins un composé ayant au moins une liaison double-liaison polymérisable.

25. Procédé selon la revendication 24, **caractérisé en ce que** le composé ayant au moins une double-liaison polymérisable n'est pas soluble dans l'eau.

26. Procédé selon l'une des revendications 24 ou 25, **caractérisé en ce que** le taux du composé ayant au moins une double-liaison polymérisable ne dépasse pas 30 % en poids - par rapport à la quantité totale de polymères.

27. Procédé selon l'une des revendications 24 à 26, **caractérisé en ce que** le composé insaturé ayant au moins une double-liaison polymérisable est choisi dans le groupe du styrène, α-méthylstyrène, toluène de vinyle et (méth)acrylate de méthyle.

28. Procédé selon l'une des revendications 24 à 26, **caractérisé en ce que** le composé insaturé ayant au moins une double-liaison polymérisable présente plus d'une double-liaison polymérisable et est en particulier choisi dans le groupe du di(méth)acrylate d'éthyfène-giycol, (méth)acrylate d'hexane-diol, (méth)acrylate d'hexane-diol, (méth)acrylate allylique et benzène divinylique.

29. Utilisation d'un polyesterpolyol, pouvant être obtenu à partir de la réaction d'au moins un acide polycarbonique ou de son anhydride avec au moins un composé OH, plus de 45 % en mole de l'acide polycarbonique étant l'acide trimellitique ou son anhydride; le composé OH présentant tout au plus deux groupes hydroxyles par molécule ; et la masse moléculaire moyenne de tous les composés OH mis en oeuvre pour fabriquer le polyesterpolyol étant supérieur à 210, dans une peinture à plusieurs couches, en particulier pour le laquage des automobiles.

30. Utilisation selon la revendication 29, **caractérisée en ce que** la peinture à plusieurs couches est appliquée sur un substrat métallique, éventuellement phosphaté, et présente au moins deux couches successives, la première couche se trouvant sur le substrat conducteur d'électricité pouvant être obtenue à partir d'un produit de revêtement déposé électrophorétiquement et la seconde couche chromophore pouvant être obtenue à partir d'un enduit de revêtement contenant le polyesterpolyol.

31. Utilisation selon la revendication 29, **caractérisée en ce que** la peinture à plusieurs couches est appliquée sur un substrat métallique, éventuellement phosphaté, et présente au moins trois couches successives, la première couche se trouvant sur le substrat conducteur d'électricité pouvant être obtenue à partir d'un produit de revêtement déposé électrophorétiquement; la seconde couche pouvant être obtenue à partir d'une matière de charge ou d'un apprêt; et la troisième couche chromophore pouvant être obtenue à partir d'un enduit de revêtement contenant le polyesterpolyol.

32. Utilisation selon la revendication 29, **caractérisée en ce que** la peinture à plusieurs couches est appliquée sur un substrat métallique, éventuellement phosphaté, et présente au moins trois couches successives, la première couche se trouvant sur le substrat conducteur d'électricité pouvant être obtenue à partir d'un produit de revêtement déposé électrophorétiquement; la seconde couche pouvant être obtenue à partir d'une composition de matières de charge hydrosolubles contenant le polyesterpolyol; et la troisième couche chromophore pouvant être obtenue à partir d'une composition de laquage de base hydrosoluble.

33. Utilisation selon la revendication 29, **caractérisée en ce que** la peinture à plusieurs couches est appliquée sur un substrat métallique, éventuellement phosphaté, et présente au moins trois couches successives, la première couche se trouvant sur le substrat conducteur d'électricité pouvant être obtenue à partir d'un produit de revêtement déposé électrophorétiquement; la seconde couche pouvant être obtenue à partir d'une composition de matières de charge hydrosolubles contenant le polyesterpolyol; et la troisième couche chromophore pouvant être obtenue à partir d'un enduit de revêtement contenant le polyesterpolyol.

34. Utilisation selon l'une des revendications 30 à 33, **caractérisée en ce que** la peinture à plusieurs couches présente une couche supplémentaire de surface pouvant être obtenue à partir d'une laque transparente.

35. Utilisation selon l'une des revendications 29 à 34, **caractérisée en ce que** le composé OH est un éther-diol, polyéther-diol, uréthane-diol, polycaprolactone-diol, polyester-diol et/ou un polycarbonate-diol.

36. Utilisation selon la revendication 35, **caractérisée en ce que** le composé OH est un polytétrahydrofurane d'une masse moléculaire moyenne de 250.

37. Utilisation selon l'une des revendications 29 à 36, **caractérisée en ce que** 60 à 100 % de l'acide polycarbonique mis en oeuvre est l'acide trimellitique ou son anhydride.

38. Utilisation selon l'une des revendications 29 à 37, **caractérisée en ce que** la masse moléculaire moyenne de tous les composés OH mis en oeuvre pour fabriquer le polyesterpolyol est supérieure à 240, de préférence à 300.

39. Utilisation selon l'une des revendications 29 à 38, **caractérisée en ce que** la masse moléculaire de tous les composés OH mis en oeuvre pour fabriquer le polyesterpolyol ne dépasse pas 650.

40. Utilisation selon l'une des revendications 29 à 39, **caractérisée en ce que** l'indice d'acidité ne dépasse pas 70.

41. Utilisation selon l'une des revendications 29 à 40, **caractérisée en ce que** le polyesterpolyol ne présente pas de groupes isocyanates libres et/ou en bloc.

42. Utilisation selon l'une des revendications 29 à 41, **caractérisée en ce que** l'acide polycarbonique utilisé pour fabriquer le polyesterpolyol est un mélange contenant :
• 50 à 80 % en mole d'acide trimellitique ou de son anhydride; et
• 50 à 20 % en mole d'un acide dicarbonique insaturé, en particulier l'acide maléique, l'acide fumarique, l'acide itaconique et/ou leur anhydrides possibles.

43. Utilisation selon l'une des revendications 29 à 42, **caractérisée en ce que** le polyesterpolyol est présent lors de la polymérisation radicalique en phase aqueuse d'au moins un composé insaturé ayant au moins une double-liaison polymérisable.

44. Utilisation selon la revendication 43, **caractérisée en ce que** le composé insaturé ayant au moins une double-liaison polymérisable n'est pas soluble dans l'eau.

45. Utilisation selon l'une des revendications 43 ou 44, **caractérisée en ce que** le taux du composé insaturé ayant au moins une double-liaison polymérisable ne dépasse pas 30 % en poids - par rapport à la quantité totale de polymères.

46. Utilisation selon l'une des revendications 43 à 45, **caractérisée en ce que** le composé insaturé ayant au moins une double-liaison polymérisable est choisi dans le groupe du styrène, α-méthylstyrène, toluène de vinyle et (méth)acrylate de méthyle.

47. Utilisation selon l'une des revendications 43 à 45, **caractérisée en ce que** le composé insaturé ayant au moins une double-liaison polymérisable présente plus d'une double-liaison polymérisable et est en particulier choisi dans le groupe du di(méth)acrylate d'éthylène-glycol, (méth)acrylate d'hexane-diol, (méth)acrylate d'hexane-diol, (méth)acrylate allylique et benzène divinylique.
